# EUROPEAN PATENT APPLICATION

(11) **EP 3 094 031 A1**
(43) Date of publication of application: **16.11.2016**
(21) Application number: 14880998.1
(22) Date of filing: 28.01.2014
(51) Int. Cl.: H04L 1/18

(54) **USER EQUIPMENT, BASE STATION AND UPLINK DATA SCHEDULING METHOD**

(71) Applicant: Huawei Technologies Co., Ltd., Longgang District Shenzhen, Guangdong 518129 (CN)
(72) Inventor: QUAN, Wei, Shenzhen Guangdong 518129 (CN); ZHANG, Jian, Shenzhen Guangdong 518129 (CN)
(74) Representative: Pfenning, Meinig & Partner mbB
(86) International application number: PCT/CN2014/071620
(87) International publication number: WO 2015/113194

(57) **Abstract**

The present invention relates to user equipment, a base station, and an uplink data scheduling method. The user equipment includes: an acquiring unit, configured to record a current quantity of transmission times for performing synchronous hybrid automatic repeat request HARQ transmission on data; and a determining unit, connected to the acquiring unit, and configured to determine, according to the current quantity of transmission times and a maximum quantity of transmission times that is configured by a base station, a manner of the HARQ transmission performed on the data at a current time point, where the HARQ transmission manner includes adaptive retransmission and non-adaptive retransmission. In the present invention, the manner of HARQ transmission performed by the UE at the current time point is determined according to the current quantity of transmission times and the maximum quantity of transmission times that is configured by the base station for the UE, which can ensure a quantity of HARQ transmission times, and improve reliability of data transmission.

## Description

### TECHNICAL FIELD

The present invention relates to the field of communications technologies, and in particular, to user equipment, a base station, and an uplink data scheduling method.

### BACKGROUND

In a Long Term Evolution (Long Time Evolution, LTE) system, when a Media Access Control (Media Access Control, MAC) layer of user equipment (User Equipment, UE) receives a scheduling command, such as uplink authorization, to send uplink data, the MAC layer of the UE uses a synchronous hybrid automatic repeat request (Hybrid Automatic Repeat reQuest, HARQ) mechanism to retransmit the uplink data. In the HARQ mechanism, the UE notifies a HARQ process corresponding to a current time point in a HARQ entity at the MAC layer of the received scheduling command, and the corresponding HARQ process performs adaptive HARQ transmission or non-adaptive HARQ transmission according to an instruction of the HARQ entity, to retransmit data.

Generally, a base station generally configures a maximum quantity of transmission times for the MAC layer of the UE. When sending data for the first time, a HARQ process of the UE sets a counter identifying a current quantity of HARQ transmission times to 0, and stores the data in a corresponding HARQ buffer. Each time the HARQ process performs one HARQ transmission on the data, the counter identifying the current quantity of HARQ transmission times increases by one. After the MAC layer of the UE transmits the data by using the HARQ process, if a negative acknowledgement (Negative Acknowledgement, NACK) is received from the base station, the MAC layer of the UE retransmits the data at a particular time interval according to a retransmission scheduling command of the base station, such as a physical downlink control channel (Physical Downlink Control Channel, PDCCH), by using a physical resource, a modulation and coding scheme, and the like in the retransmission scheduling command. When the UE receives an acknowledgement (Acknowledgement, ACK) from the base station and a quantity of transmission times is less than a value obtained by subtracting one from the maximum quantity of transmission times that is configured by the base station, the UE does not clear the HARQ buffer corresponding to the data. In this case, the HARQ entity may instruct a corresponding HARQ process to perform non-adaptive HARQ transmission. However, the HARQ process merely enables the corresponding counter identifying the current quantity of HARQ transmission times to increase by one, but does not actually perform retransmission. When the current quantity of HARQ transmission times that is identified by the counter is equal to a value obtained by subtracting one from the maximum quantity of transmission times that is configured by the base station, the UE clears the HARQ buffer corresponding to the data.

In the prior art, even if UE does not actually perform HARQ transmission, a counter identifying a current quantity of HARQ transmission times increases by one at an interval of a period of time. Therefore, when a quantity of counting times of the counter that is of the UE and that identifies the current quantity of HARQ transmission times is equal to a value obtained by subtracting one from a maximum quantity of transmission times that is configured by a base station, a quantity of times of HARQ transmission actually performed by the UE is less than the maximum quantity of transmission times that is configured by the base station, and reliability of data transmission by using a HARQ is reduced.

### SUMMARY

### Technical Problem

In view of this, a technical problem to be resolved in the present invention is how to improve reliability of data transmission by using a HARQ.

### Solution

To resolve the foregoing technical problem, according to a first aspect, user equipment is provided, including:
an acquiring unit, configured to record a current quantity of transmission times for performing synchronous hybrid automatic repeat request HARQ transmission on data; and
a determining unit, connected to the acquiring unit, and configured to determine, according to the current quantity of transmission times and a maximum quantity of transmission times that is configured by a base station, a manner of the HARQ transmission performed on the data at a current time point, where the HARQ transmission manner includes adaptive retransmission and non-adaptive retransmission.

With reference to the first aspect, in a first possible implementation manner of the first aspect, the acquiring unit is configured to:
when the HARQ transmission is performed on the data at the current time point, acquire a transmission condition at the current time point;
the user equipment further includes:
   a counter, connected to the acquiring unit and the determining unit, and configured to identify the current quantity of transmission times; and
the determining unit is configured to determine a value of the counter according to the transmission condition.

With reference to the first possible implementation manner of the first aspect, in a second possible implementation manner of the first aspect, the determining unit is further configured to:
increase the counter by one if the HARQ transmission needs to be performed on the data at the current time point, and decrease the counter by one if the HARQ transmission of the data at the current time point is canceled according to the transmission condition; or
increase the counter by one if a HARQ entity notifies a HARQ process that the HARQ transmission needs to be performed on the data at the current time point, and keep the counter unchanged if the HARQ process cancels the HARQ transmission of the data at the current time point according to the transmission condition; or
increase the counter by one if the HARQ transmission is actually performed at the current time point according to the transmission condition; where
an occurrence of any one of the following cases indicates that the determining unit cancels the HARQ transmission of the data at the current time point according to the transmission condition:
   that a transmission direction at the current time point is downlink is acquired when retransmission is performed at the current time point; or
   a received feedback on last HARQ transmission is an acknowledgement ACK, and no HARQ scheduling command of the base station is received; or
   there is a conflict with a measurement gap at the current time point.

With reference to the first aspect or any possible implementation manner of the first aspect, in a third possible implementation manner of the first aspect, the determining unit is further configured to:
if the value of the counter identifying the current quantity of transmission times is less than a specified threshold, perform the non-adaptive retransmission or the adaptive retransmission on the data, where the specified threshold is determined according to the maximum quantity of transmission times; or if the value of the counter identifying the current quantity of transmission times is greater than or equal to the specified threshold, perform the adaptive retransmission on the data according to scheduling of the base station.

According to a second aspect, user equipment is provided, including:
an acquiring unit, configured to: when HARQ transmission is performed on data at a current time point, acquire a transmission condition at the current time point; and
a determining unit, connected to the acquiring unit, and configured to cancel the HARQ transmission of the data at the current time point according to the transmission condition.

With reference to the second aspect, in a first possible implementation manner of the second aspect, the determining unit is further configured to:
if a transmission direction at the current time point is uplink, perform the HARQ transmission on the data at the current time point, or if the transmission direction is downlink, cancel the HARQ transmission of the data at the current time point; or
if a received feedback on last HARQ transmission is an ACK, and no HARQ scheduling command of the base station is received, cancel the HARQ transmission of the data at the current time point; or
if there is a conflict with a measurement gap at the current time point, cancel the HARQ transmission of the data at the current time point.

With reference to the second aspect, in a second possible implementation manner of the second aspect, the determining unit is further configured to:
delay a time point for performing the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

According to a third aspect, user equipment is provided, including:
an acquiring unit, configured to receive a HARQ transmission configuration instruction from a base station, where the configuration instruction is used to instruct to adjust a transmission manner of HARQ transmission to asynchronization; and
a determining unit, connected to the acquiring unit, and configured to determine, according to a scheduling command of the base station, whether the HARQ transmission is performed on data.

With reference to the third aspect, in a first possible implementation manner of the third aspect, the acquiring unit is configured to:
receive the HARQ transmission configuration instruction from the receiving base station by using a radio resource control RRC protocol message, a Media Access Control layer message, or a physical layer message; or
receive the HARQ transmission configuration instruction from the receiving base station by means of time division duplex TDD.

According to a fourth aspect, user equipment is provided, including:
an acquiring unit, configured to receive an uplink-downlink configuration change command from a base station, where the uplink-downlink configuration change command is used to notify the UE of a new uplink-downlink configuration; and
an execution unit, connected to the acquiring unit, and configured to clear an uplink synchronous hybrid automatic repeat request HARQ buffer and/or a downlink HARQ soft buffer according to the new uplink-downlink configuration, or configured to cancel uplink HARQ transmission and/or downlink HARQ transmission according to the new uplink-downlink configuration.

With reference to the fourth aspect, in a first possible implementation manner of the fourth aspect, the execution unit is configured to:
clear data in the uplink HARQ buffers of all the uplink HARQ processes, or clear data in the uplink HARQ buffer of the redundant uplink HARQ process, and/or
clear data in the downlink HARQ soft buffers of all the downlink HARQ processes, or clear data in the downlink HARQ soft buffer of the redundant downlink HARQ process; or
cancel transmission of data of all the uplink HARQ processes, or cancel transmission of data of the redundant uplink HARQ process, and/or
cancel transmission of data in soft buffers of all the downlink HARQ processes, or cancel transmission of data in the redundant downlink HARQ soft buffer.

With reference to the first possible implementation manner of the fourth aspect, in a second possible implementation manner of the fourth aspect, the execution unit is configured to:
clear, according to the uplink-downlink configuration notified in the new uplink-downlink configuration change command, the HARQ buffer of an uplink HARQ process that cannot perform the uplink HARQ transmission, and/or
clear, by the UE according to the uplink-downlink configuration notified in the uplink-downlink configuration change command, the HARQ buffer of the downlink HARQ process that cannot perform the downlink HARQ transmission; or
cancel, according to the uplink-downlink configuration notified in the uplink-downlink configuration change command, transmission of data in the HARQ buffer of the uplink HARQ process that cannot perform the uplink HARQ transmission, and/or
cancel, according to the uplink-downlink configuration notified in the uplink-downlink configuration change command, transmission of data in the HARQ buffer of the downlink HARQ process that cannot perform the downlink HARQ transmission.

According to a fifth aspect, an uplink data scheduling method is provided, including:
recording, by user equipment UE, a current quantity of transmission times for performing synchronous hybrid automatic repeat request HARQ transmission on data; and
determining, by the UE according to the current quantity of transmission times and a maximum quantity of transmission times that is configured by a base station for the UE, a manner of the HARQ transmission performed by the UE on the data at a current time point, where the HARQ transmission manner includes adaptive retransmission and non-adaptive retransmission.

With reference to the fifth aspect, in a first possible implementation manner of the fifth aspect, the recording, by UE, a current quantity of transmission times for performing HARQ transmission on data includes:
when the UE needs to perform the HARQ transmission on the data at the current time point, acquiring a transmission condition of the UE at the current time point; and
determining, according to the transmission condition, a value of a counter identifying the current quantity of transmission times.

With reference to the first possible implementation manner of the fifth aspect, in a second possible implementation manner of the fifth aspect, the determining, according to the transmission condition, a value of a counter identifying the current quantity of transmission times includes:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   the UE acquires that a transmission direction at the current time point is downlink when the HARQ process performs retransmission at the current time point; or
   a feedback on last HARQ transmission received by the HARQ process is an acknowledgement ACK, and no HARQ scheduling command of the base station is received; or
   the HARQ process conflicts with a measurement gap at the current time point.

With reference to the fifth aspect or any possible implementation manner of the fifth aspect, in a third possible implementation manner of the fifth aspect, the determining, by the UE according to the current quantity of transmission times and a maximum quantity of transmission times that is configured by a base station for the UE, a manner of the HARQ transmission performed by the UE at a current time point includes:
if the value of the counter identifying the current quantity of transmission times is less than or equal to a specified threshold, performing, by the UE, the non-adaptive retransmission or the adaptive retransmission on the data, where the specified threshold is determined according to the maximum quantity of transmission times; or if the value of the counter identifying the current quantity of transmission times is greater than or equal to the specified threshold, performing, by the UE, the adaptive retransmission on the data according to scheduling of the base station.

According to a sixth aspect, an uplink data scheduling method is provided, including:
when UE needs to perform HARQ transmission on data at a current time point, acquiring a transmission condition of the UE at the current time point; and
canceling, by the UE, the HARQ transmission of the data at the current time point according to the transmission condition.

With reference to the sixth aspect, in a first possible implementation manner of the sixth aspect, the canceling, by the UE, the HARQ transmission of the data at the current time point according to the transmission condition includes:
if a transmission direction of the UE at the current time point is uplink, performing, by the UE, the HARQ transmission on the data at the current time point, or if the transmission direction is downlink, canceling, by the UE, the HARQ transmission of the data at the current time point; or
if a feedback on last HARQ transmission received by the UE is an ACK, and no HARQ scheduling command of the base station is received, canceling, by the UE, the HARQ transmission of the data at the current time point; or
if the UE conflicts with a measurement gap at the current time point, canceling, by the UE, the HARQ transmission of the data at the current time point.

With reference to the sixth aspect, in a second possible implementation manner of the sixth aspect, after the determining, by the UE, to cancel the HARQ transmission of the data at the current time point according to the transmission condition, the method further includes:
delaying, by the UE, a time point for performing the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

According to a seventh aspect, an uplink data scheduling method is provided, including:
receiving, by UE, a HARQ transmission configuration instruction from a base station, where the configuration instruction is used to instruct the UE to adjust a transmission manner of HARQ transmission to asynchronization; and
determining, by the UE according to a scheduling command of the base station, whether the HARQ transmission is performed on data.

With reference to the seventh aspect, in a first possible implementation manner of the seventh aspect, the receiving, by UE, a HARQ transmission configuration instruction from a base station includes:
receiving, by the UE, the HARQ transmission configuration instruction from the receiving base station by using a radio resource control RRC protocol message, a Media Access Control layer message, or a physical layer message.

According to an eighth aspect, an uplink data scheduling method is provided, including:
receiving, by UE, an uplink-downlink configuration change command from a base station, where the uplink-downlink configuration change command is used to notify the UE of a new uplink-downlink configuration; and
clearing, by the UE, an uplink synchronous hybrid automatic repeat request HARQ buffer and/or a downlink HARQ soft buffer according to the new uplink-downlink configuration, or canceling, by the UE, uplink HARQ transmission and/or downlink HARQ transmission according to the new uplink-downlink configuration.

With reference to the eighth aspect, in a first possible implementation manner of the eighth aspect, the clearing, by the UE, an uplink HARQ buffer according to the new uplink-downlink configuration includes:
clearing, by the UE, data in the uplink HARQ buffers of all the uplink HARQ processes, or clearing, by the UE, data in the uplink HARQ buffer of the redundant uplink HARQ process;
the clearing, by the UE, a downlink HARQ soft buffer according to the new uplink-downlink configuration includes:
   clearing, by the UE, data in the downlink HARQ soft buffers of all the downlink HARQ processes, or clearing, by the UE, data in the downlink HARQ soft buffer of the redundant downlink HARQ process;
the canceling, by the UE, uplink HARQ transmission according to the new uplink-downlink configuration includes:
   canceling, by the UE, transmission of data of all the uplink HARQ processes, or canceling, by the UE, transmission of data of the redundant uplink HARQ process; and
the canceling, by the UE, downlink HARQ transmission according to the new uplink-downlink configuration includes:
   canceling, by the UE, transmission of data in soft buffers of all the downlink HARQ processes, or canceling, by the UE, transmission of data in the redundant downlink HARQ soft buffer.

With reference to the first possible implementation manner of the eighth aspect, in a second possible implementation manner of the eighth aspect, the clearing, by the UE, data in the uplink HARQ buffer of the redundant uplink HARQ process includes:
clearing, by the UE according to the uplink-downlink configuration notified in the new uplink-downlink configuration change command, the HARQ buffer of an uplink HARQ process that cannot perform the uplink HARQ transmission;
the clearing, by the UE, data in the downlink HARQ soft buffer of the redundant downlink HARQ process includes:
   clearing, by the UE according to the uplink-downlink configuration notified in the uplink-downlink configuration change command, the HARQ buffer of the downlink HARQ process that cannot perform the downlink HARQ transmission;
   the canceling, by the UE, transmission of data of the redundant uplink HARQ process includes:
canceling, by the UE according to the uplink-downlink configuration notified in the uplink-downlink configuration change command, transmission of data in the HARQ buffer of the uplink HARQ process that cannot perform the uplink HARQ transmission; and
the canceling, by the UE, transmission of data in the redundant downlink HARQ soft buffer includes:
   canceling, by the UE according to the uplink-downlink configuration notified in the uplink-downlink configuration change command, transmission of data in the HARQ buffer of the downlink HARQ process that cannot perform the downlink HARQ transmission.

According to a ninth aspect, a base station is provided, including:
a control unit, configured to: configure a maximum quantity of transmission times for UE, and record a current quantity of transmission times for the UE to perform synchronous hybrid automatic repeat request HARQ transmission on data; and
an execution unit, connected to the control unit, and configured to determine, according to the current quantity of transmission times of the UE and the maximum quantity of transmission times, a manner of the HARQ transmission performed by the UE on the data at a current time point.

With reference to the ninth aspect, in a first possible implementation manner of the ninth aspect, the control unit is configured to:
when the UE needs to perform the HARQ transmission on the data at the current time point, acquire a transmission condition of the UE at the current time point; and
the base station further includes:
   a counter, connected to the control unit and the execution unit, and configured to determine, according to the transmission condition, a value of the counter identifying the current quantity of transmission times.

With reference to the first possible implementation manner of the ninth aspect, in a second possible implementation manner of the ninth aspect, the execution unit is configured to:
increase the counter by one if a HARQ entity in the UE notifies a HARQ process that the HARQ transmission needs to be performed on the data at the current time point, and decrease the counter by one if the HARQ process cancels the HARQ transmission of the data at the current time point according to the transmission condition; or
increase the counter by one if a HARQ entity in the UE notifies a HARQ process that the HARQ transmission needs to be performed on the data at the current time point, and keep the counter unchanged if the HARQ process cancels the HARQ transmission of the data at the current time point according to the transmission condition; or
increase the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   a transmission direction at the current time point is downlink; or
   the HARQ process sends no scheduling command; or
   the HARQ process conflicts with a measurement gap at the current time point.

With reference to the ninth aspect or any possible implementation manner of the ninth aspect, in a third possible implementation manner of the ninth aspect, the execution unit is configured to:
if the value of the counter identifying the current quantity of transmission times is less than or equal to a specified threshold, enable the UE to perform the non-adaptive retransmission or the adaptive retransmission on the data, where the specified threshold is determined according to the maximum quantity of transmission times; or if the value of the counter identifying the current quantity of transmission times is greater than or equal to the specified threshold, enable the UE to perform the adaptive retransmission on the data according to a scheduling command.

With reference to the ninth aspect or any possible implementation manner of the ninth aspect, in a fourth possible implementation manner of the ninth aspect, the execution unit is configured to:
delay a time point for the UE to perform the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

According to a tenth aspect, a base station is provided, including:
a control unit, configured to send a HARQ transmission configuration instruction to UE, where the configuration instruction is used to instruct the UE to adjust a transmission manner of HARQ transmission to asynchronization; and
an execution unit, connected to the control unit, and configured to send a scheduling command to the UE, so that the UE performs the HARQ transmission on data.

With reference to the tenth aspect, in a first possible implementation manner of the tenth aspect, the control unit is configured to:
send the HARQ transmission configuration instruction to the UE by using a radio resource control RRC protocol message, a Media Access Control layer message, or a physical layer message.

According to an eleventh aspect, a base station is provided, including:
a control unit, configured to send an uplink-downlink configuration change command to UE, where the uplink-downlink configuration change command is used to notify the UE of a new uplink-downlink configuration; and
an execution unit, connected to the control unit, and configured to clear an uplink synchronous hybrid automatic repeat request HARQ soft buffer and/or a downlink HARQ buffer of the UE according to the new uplink-downlink configuration, or configured to cancel uplink HARQ transmission and/or downlink HARQ transmission of the UE according to the new uplink-downlink configuration.

With reference to the eleventh aspect, in a first possible implementation manner of the eleventh aspect, the execution unit is configured to:
clear data in the uplink HARQ buffers of all the uplink HARQ processes of the UE, or clear data in the uplink HARQ soft buffer of the redundant uplink HARQ process of the UE, and/or
clear data in the downlink HARQ buffers of all the downlink HARQ processes of the UE, or clear data in the downlink HARQ buffer of the redundant downlink HARQ process of the UE; or
cancel transmission of data of all the uplink HARQ processes of the UE, or cancel transmission of data of the redundant uplink HARQ process of the UE, and/or
cancel transmission of data in buffers of all the downlink HARQ processes of the UE, or cancel transmission of data in the redundant downlink HARQ buffer of the UE.

With reference to the first possible implementation manner of the eleventh aspect, in a second possible implementation manner of the eleventh aspect, the execution unit is further configured to:
clear, according to the uplink-downlink configuration notified in the new uplink-downlink configuration change command, the HARQ soft buffer of an uplink HARQ process that is of the UE and that cannot perform the uplink HARQ transmission, and/or
clear, according to the uplink-downlink configuration notified in the uplink-downlink configuration change command, the HARQ buffer of the downlink HARQ process that is of the UE and that cannot perform the downlink HARQ transmission; or
cancel, according to the uplink-downlink configuration notified in the uplink-downlink configuration change command, transmission of data in the HARQ soft buffer of the uplink HARQ process that is of the UE and that cannot perform the uplink HARQ transmission, and/or
cancel, according to the uplink-downlink configuration notified in the uplink-downlink configuration change command, transmission of data in the HARQ soft buffer of the downlink HARQ process that is of the UE and that cannot perform the downlink HARQ transmission.

According to a twelfth aspect, an uplink data scheduling method is provided, including:
configuring, by a base station, a maximum quantity of transmission times for UE, and recording a current quantity of transmission times for the UE to perform synchronous hybrid automatic repeat request HARQ transmission on data; and
determining, by the base station according to the current quantity of transmission times of the UE and the maximum quantity of transmission times, a manner of the HARQ transmission performed by the UE on the data at a current time point.

With reference to the twelfth aspect, in a first possible implementation manner of the twelfth aspect, the configuring, by a base station, a maximum quantity of transmission times for UE, and recording a current quantity of transmission times for the UE to perform synchronous hybrid automatic repeat request HARQ transmission on data include:
when the UE needs to perform the HARQ transmission on the data at the current time point, acquiring a transmission condition of the UE at the current time point; and
determining, according to the transmission condition, a value of a counter identifying the current quantity of transmission times.

With reference to the first possible implementation manner of the twelfth aspect, in a second possible implementation manner of the twelfth aspect, the determining, according to the transmission condition, a value of a counter identifying the current quantity of transmission times includes:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   the base station acquires that a transmission direction at the current time point is downlink when the HARQ process performs retransmission at the current time point; or
   a feedback on last HARQ transmission received by the HARQ process is an acknowledgement ACK, and the base station sends no HARQ scheduling command; or
   the HARQ process conflicts with a measurement gap at the current time point.

With reference to the twelfth aspect or any possible implementation manner of the twelfth aspect, in a third possible implementation manner of the twelfth aspect, the determining, by the UE according to the current quantity of transmission times and a maximum quantity of transmission times that is configured by a base station for the UE, a manner of the HARQ transmission performed by the UE at a current time point includes:
if the value of the counter identifying the current quantity of transmission times is less than or equal to a specified threshold, enabling the UE to perform the non-adaptive retransmission or the adaptive retransmission on the data, where the specified threshold is determined according to the maximum quantity of transmission times; or if the value of the counter identifying the current quantity of transmission times is greater than or equal to the specified threshold, enabling the UE to perform the adaptive retransmission on the data according to scheduling of the base station.

With reference to the twelfth aspect or any possible implementation manner of the twelfth aspect, in a fourth possible implementation manner of the twelfth aspect, the increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition further include:
delaying, by the base station, a time point for the UE to perform the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

According to a thirteenth aspect, an uplink data scheduling method is provided, including:
sending, by a base station, a HARQ transmission configuration instruction to UE, where the configuration instruction is used to instruct the UE to adjust a transmission manner of HARQ transmission to asynchronization; and
sending, by the base station, a scheduling command to the UE, so that the UE performs the HARQ transmission on data.

With reference to the thirteenth aspect, in a first possible implementation manner of the thirteenth aspect, the sending, by a base station, a HARQ transmission configuration instruction to UE includes:
sending, by the base station, the HARQ transmission configuration instruction to the UE by using a radio resource control RRC protocol message, a Media Access Control layer message, or a physical layer message.

According to a fourteenth aspect, an uplink data scheduling method is provided, including:
sending, by a base station, an uplink-downlink configuration change command to UE, where the uplink-downlink configuration change command is used to notify the UE of a new uplink-downlink configuration; and
clearing, by the base station, an uplink synchronous hybrid automatic repeat request HARQ soft buffer and/or a downlink HARQ buffer of the UE according to the new uplink-downlink configuration, or canceling, by the base station, uplink HARQ transmission and/or downlink HARQ transmission of the UE according to the new uplink-downlink configuration.

With reference to the fourteenth aspect, in a first possible implementation manner of the fourteenth aspect, the clearing, by the base station, an uplink synchronous hybrid automatic repeat request HARQ soft buffer of the UE according to the new uplink-downlink configuration includes:
clearing, by the base station, data in the uplink HARQ buffers of all the uplink HARQ processes of the UE, or clearing, by the base station, data in the uplink HARQ soft buffer of the redundant uplink HARQ process of the UE;
the clearing, by the base station, a downlink HARQ buffer of the UE according to the new uplink-downlink configuration includes:
   clearing, by the base station, data in the downlink HARQ buffers of all the downlink HARQ processes of the UE, or clearing, by the base station, data in the downlink HARQ buffer of the redundant downlink HARQ process of the UE;
the canceling, by the base station, uplink HARQ transmission of the UE according to the new uplink-downlink configuration includes:
   canceling, by the base station, transmission of data of all the uplink HARQ processes of the UE, or canceling, by the base station, transmission of data of the redundant uplink HARQ process of the UE; and
the canceling, by the base station, downlink HARQ transmission of the UE according to the new uplink-downlink configuration includes:
   canceling, by the base station, transmission of data in buffers of all the downlink HARQ processes of the UE, or canceling, by the base station, transmission of data in the redundant downlink HARQ buffer of the UE.

With reference to the first possible implementation manner of the fourteenth aspect, in a second possible implementation manner of the fourteenth aspect, the clearing, by the base station, data in the uplink HARQ soft buffer of the redundant uplink HARQ process of the UE includes:
clearing, by the base station according to the uplink-downlink configuration notified in the new uplink-downlink configuration change command, the HARQ soft buffer of an uplink HARQ process that is of the UE and that cannot perform the uplink HARQ transmission;
the clearing, by the base station, data in the downlink HARQ buffer of the redundant downlink HARQ process of the UE includes:
   clearing, by the base station according to the uplink-downlink configuration notified in the uplink-downlink configuration change command, the HARQ buffer of the downlink HARQ process that is of the UE and that cannot perform the downlink HARQ transmission;
the canceling, by the base station, transmission of data of the redundant uplink HARQ process of the UE includes:
   canceling, by the base station according to the uplink-downlink configuration notified in the uplink-downlink configuration change command, transmission of data in the HARQ soft buffer of the uplink HARQ process that is of the UE and that cannot perform the uplink HARQ transmission; and
the canceling, by the base station, transmission of data in the redundant downlink HARQ buffer of the UE includes:
   canceling, by the base station according to the uplink-downlink configuration notified in the uplink-downlink configuration change command, transmission of data in the HARQ soft buffer of the downlink HARQ process that is of the UE and that cannot perform the downlink HARQ transmission.

According to a fifteenth aspect, a communications system is provided, including:
at least one user equipment UE and at least one base station, where
the user equipment uses the user equipment provided in any one of the foregoing possible implementation manners; and
the base station uses the base station provided in any one of the foregoing possible implementation manners.

### Advantageous Effect

According to the user equipment, the base station, and the uplink data scheduling method in the embodiments of the present invention, a manner of HARQ transmission performed by the UE at a current time point is determined according to a current quantity of transmission times and a maximum quantity of transmission times that is configured by the base station for the UE, which can ensure a quantity of HARQ transmission times, and improve reliability of data transmission.

Exemplary embodiments are described in detail with reference to accompanying drawings to make other features and aspects of the present invention clearer.

### BRIEF DESCRIPTION OF DRAWINGS

Accompanying drawings included in the specification and constructing a part of the specification and the specification jointly show the exemplary embodiments, characteristics and aspects of the present invention, and are intended to explain the principles of the present invention.
FIG. 1 is a structural block diagram of user equipment according to Embodiment 1 of the present invention;
FIG. 2 is a structural block diagram of user equipment according to Embodiment 2 of the present invention;
FIG. 3 is a structural block diagram of user equipment according to Embodiment 3 of the present invention;
FIG. 4 is a structural block diagram of user equipment according to Embodiment 4 of the present invention;
FIG. 5 is a flowchart of an uplink data scheduling method according to Embodiment 5 of the present invention;
FIG. 6 is a flowchart of an uplink data scheduling method according to Embodiment 6 of the present invention;
FIG. 7 is a flowchart of an uplink data scheduling method according to Embodiment 7 of the present invention;
FIG. 8 is a flowchart of an uplink data scheduling method according to Embodiment 8 of the present invention;
FIG. 9 is a flowchart of an uplink data scheduling method according to Embodiment 9 of the present invention;
FIG. 10 is a flowchart of an uplink data scheduling method according to Embodiment 10 of the present invention;
FIG. 11 is a structural block diagram of a base station according to Embodiment 11 of the present invention;
FIG. 12 is a structural block diagram of a base station according to Embodiment 12 of the present invention;
FIG. 13 is a structural block diagram of a base station according to Embodiment 13 of the present invention;
FIG. 14 is a flowchart of an uplink data scheduling method according to Embodiment 14 of the present invention;
FIG. 15 is a flowchart of an uplink data scheduling method according to Embodiment 15 of the present invention;
FIG. 16 is a flowchart of an uplink data scheduling method according to Embodiment 16 of the present invention;
FIG. 17 is a structural block diagram of user equipment according to Embodiment 17 of the present invention; and
FIG. 18 is a structural block diagram of a base station according to Embodiment 18 of the present invention.

### DESCRIPTION OF EMBODIMENTS

The following will describe various exemplary embodiments, features and aspects of the present invention in detail with reference to the accompanying drawings. Like accompanying symbols in the accompanying drawings represent elements with like or similar functions. Although various aspects of the embodiments are illustrated in the accompanying drawing, the accompanying drawings are not necessarily drawn in proportion unless otherwise specified.

The specific term "exemplary" herein means "used as an example, embodiment or illustrative". Any embodiment described as "exemplary" is not necessarily explained as being superior or better than other embodiments.

In addition, for better illustration of the present invention, various specific details are given in the following specific implementation manner. A person of ordinary skill in the art should understand that the present invention may also be implemented without the specific details. In some other embodiments, methods, means, components, and circuits well known by a person skilled in the art are not described in detail, so that a main purpose of the present invention is highlighted.

### Embodiment 1

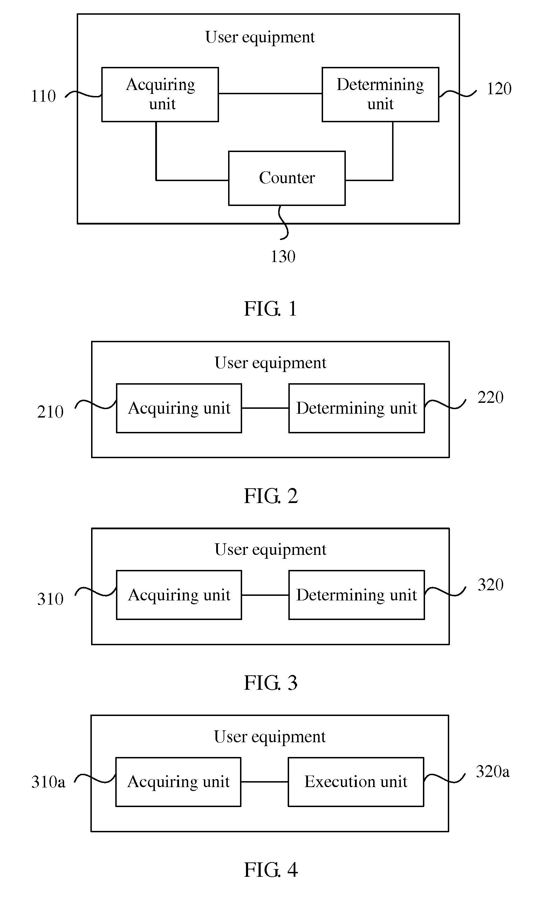

FIG. 1 is a structural block diagram of user equipment according to Embodiment 1 of the present invention. As shown in FIG. 1, the user equipment mainly includes:
an acquiring unit 110, configured to record a current quantity of transmission times for performing synchronous hybrid automatic repeat request HARQ transmission on data; and
a determining unit 120, connected to the acquiring unit 110, and configured to determine, according to the current quantity of transmission times and a maximum quantity of transmission times that is configured by a base station, a manner of the HARQ transmission performed on the data at a current time point, where the HARQ transmission manner includes adaptive retransmission and non-adaptive retransmission, the adaptive retransmission refers to determining, according to scheduling of the base station, whether the HARQ transmission is performed, and the non-adaptive retransmission refers to automatically performing the HARQ transmission according to a preconfiguration.

Specifically, the UE includes a HARQ entity, and the HARQ entity includes the acquiring unit 110 and the determining unit 120 that are configured to perform multiple HARQ processes. One HARQ process refers to that the base station performs scheduling to perform one data transmission and then the base station receives ACK/NACK information. The UE implements the HARQ transmission by using a HARQ process, and a quantity of HARQ processes refers to a quantity of concurrent HARQs. The HARQ transmission includes HARQ transmission for the first time or HARQ retransmission. In the UE, a HARQ process is associated with a counter identifying a current quantity of HARQ transmission times. Each time a MAC layer of the UE performs one HARQ transmission operation on the data by using a same process, the counter identifying the current quantity of HARQ transmission times increases by one. If the HARQ transmission manner is synchronous non-adaptive retransmission, and if a negative acknowledgement (Negative Acknowledgement, NACK) of the base station is received after the MAC layer of the UE transmits data by using a HARQ process, the UE retransmits the data at a particular time interval by using a same physical resource, a same modulation and coding scheme, and the like. If the HARQ transmission manner is synchronous adaptive retransmission, after the MAC layer of the UE transmits data by using a HARQ process, the MAC layer of the UE retransmits the data at a particular time interval according to a retransmission scheduling command of the base station, such as a physical downlink control channel (Physical Downlink Control Channel, PDCCH), by using a physical resource, a modulation and coding scheme, and the like in the retransmission scheduling command.

In a possible implementation manner, the acquiring unit 110 is configured to:
when the HARQ transmission is performed on the data at the current time point, acquire a transmission condition at the current time point;
the user equipment further includes:
   a counter 130, connected to the acquiring unit 110 and the determining unit 120, and configured to identify the current quantity of transmission times; and
the determining unit 120 is configured to determine a value of the counter 130 according to the transmission condition.

In a possible implementation manner, the determining unit 120 is configured to:
if the value of the counter 130 identifying the current quantity of transmission times is less than a specified threshold, perform the non-adaptive retransmission or the adaptive retransmission on the data, where the specified threshold is determined according to the maximum quantity of transmission times; or if the value of the counter 130 identifying the current quantity of transmission times is greater than or equal to the specified threshold, buffer the data, and perform, by the UE, the adaptive retransmission on the data according to scheduling of the base station.

In a possible implementation manner, an actual quantity of transmission times of the UE may reach the maximum quantity of transmission times, to ensure reliability of data transmission. Specific device configuration steps are as follows:
Step 11: After the UE sends the data, if the negative acknowledgement (NACK) of the base station is received, the UE acquires and determines, by using the acquiring unit 110, the current quantity of HARQ transmission times that is identified by the counter 130, and determines, by using the determining unit 120, whether the current quantity of HARQ transmission times is less than the specified threshold; if yes, the UE may perform non-adaptive HARQ transmission.

In a possible implementation manner, it may be assumed that when a HARQ process transmits data for the first time, the current quantity of HARQ transmission times that is identified by the counter 130 is 0; in this case, the specified threshold is a value obtained by subtracting one from the maximum quantity of transmission times that is configured by the base station. It may also be assumed that when a HARQ process transmits data for the first time, the current quantity of HARQ transmission times that is identified by the counter 130 is 1, and the specified threshold is the maximum quantity of transmission times that is configured by the base station.

Step 12: When the current quantity of HARQ transmission times that is identified by the counter 130 is equal to the specified threshold, if the determining unit 120 does not receive an acknowledgement from the base station, the determining unit 120 no longer performs the non-adaptive retransmission, but stores the data in a corresponding HARQ buffer.

It should be noted that the determining unit 120 in the HARQ entity may perform the foregoing determining and operation, or the HARQ process may perform the foregoing determining and operation. When the HARQ process performs the foregoing determining and operation, it may be specifically: after a HARQ process of the UE receives a notification, from the HARQ entity, of performing the non-adaptive retransmission, determining whether the current quantity of HARQ transmission times that is identified by the counter 130 associated with the HARQ process is less than the specified threshold, and if yes, performing the non-adaptive retransmission. When the HARQ entity performs the foregoing determining and operation, it may be specifically: before the HARQ entity of the UE instructs a HARQ process corresponding to the current time point to perform the non-adaptive HARQ transmission, determining whether the counter 130 that is associated with the HARQ process and that identifies the current quantity of HARQ transmission times is less than the specified threshold configured by the base station, and if yes, instructing the HARQ process to perform the non-adaptive HARQ transmission.

Step 13: If the current quantity of HARQ transmission times that is identified by the counter 130 is greater than or equal to the specified threshold configured by the base station, and if the UE receives the retransmission scheduling command of the base station, the UE performs the adaptive retransmission according to the scheduling command.

It should be noted that when the current quantity of HARQ transmission times that is identified by the counter 130 is less than the specified threshold, the UE may also perform the adaptive retransmission according to the retransmission scheduling command of the base station.

In a possible implementation manner, the base station may configure the UE, so that the UE performs the foregoing function. Specifically, the base station may use a protocol form, a broadcast message, or a dedicated message to configure the UE, so that the UE performs the foregoing function.

In a possible implementation manner, the determining unit 120 is further configured to:
increase the counter 130 by one if the HARQ transmission needs to be performed at the current time point, and decrease the counter 130 by one if the HARQ transmission of the data at the current time point is canceled according to the transmission condition; or
increase the counter 130 by one if the HARQ transmission is actually performed at the current time point according to the transmission condition; where
an occurrence of any one of the following cases indicates that the determining unit 120 cancels the HARQ transmission of the data at the current time point according to the transmission condition:
   that a transmission direction at the current time point is downlink is detected when the HARQ transmission is performed at the current time point; or
   a received feedback on last HARQ transmission is an acknowledgement ACK, and no HARQ scheduling command of the base station is received; or
   there is a conflict with a measurement gap at the current time point.

In a possible implementation manner, when a HARQ process of the UE does not actually perform the HARQ transmission, the counter 130 does not increase the current quantity of HARQ transmission times, to ensure that an actual quantity of transmission times of the UE can reach the maximum quantity of transmission times that is configured by the base station. Specific device configuration steps are as follows:
Step 21: When the determining unit 120 instructs the HARQ process corresponding to the current time point to perform the HARQ transmission, the counter 130 that is associated with the HARQ process and that identifies the current quantity of HARQ transmission times increases by one.
Step 22: When the determining unit 120 does not actually perform the HARQ transmission at the current time point, the counter 130 that is associated with the HARQ process and that identifies the current quantity of HARQ transmission times decreases by one.

Alternatively, when the determining unit 120 instructs the HARQ process corresponding to the current time point to perform the HARQ transmission, the counter 130 determines, according to whether the HARQ transmission can be actually performed, whether the counter 130 that is associated with the HARQ process and that identifies the current quantity of HARQ transmission times increases by one. The counter 130 identifying the current quantity of HARQ transmission times increases by one if the HARQ process can actually perform the HARQ transmission.

In a possible implementation manner, the base station may configure the UE, so that the UE performs the foregoing function. Specifically, the base station may use a protocol form, a broadcast message, or a dedicated message to configure the UE, so that the UE performs the foregoing function.

The user equipment in this embodiment determines a manner of HARQ transmission performed by the UE at a current time point according to a current quantity of transmission times and a maximum quantity of transmission times that is configured by a base station for the UE, which can ensure a quantity of HARQ transmission times, and improve reliability of data transmission.

### Embodiment 2

FIG. 2 is a structural block diagram of user equipment according to Embodiment 2 of the present invention. As shown in FIG. 2, the user equipment mainly includes:
an acquiring unit 210, configured to: when HARQ transmission is performed on data at a current time point, acquire a transmission condition at the current time point; and
a determining unit 220, connected to the acquiring unit 210, and configured to cancel the HARQ transmission of the data at the current time point according to the transmission condition.

Specifically, in a time division duplex (Time Division Duplexing, TDD) system, different uplink-downlink subframe configurations are supported to be used by the UE at different time, that is, an uplink-downlink subframe configuration used by the UE may dynamically change among multiple uplink-downlink subframe configurations. As shown in Table 1, directions of some subframes, such as subframes 0, 1, and 2, do not change, which are uplink subframes all the time or downlink subframes all the time, and directions of some subframes change with the used uplink-downlink subframe configurations. As shown in Table 1, when an uplink-downlink configuration of a subframe 4 is 0, a direction of the subframe 4 is uplink; and when the uplink-downlink configuration is 1, the direction of the subframe 4 is downlink.

**Table 1 Uplink-downlink subframe configuration in the time division duplex system**

| **Uplink-downlink configuration** | **Uplink**-**to**-**downlink switch**-**point period** | **Subframe number** | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In a possible implementation manner, the determining unit 220 is configured to:
if a transmission direction at the current time point is uplink, perform the HARQ transmission on the data at the current time point, or if the transmission direction is downlink, cancel the HARQ transmission of the data at the current time point; or
if a received feedback on last HARQ transmission is an ACK, and no HARQ scheduling command of the base station is received, cancel the HARQ transmission of the data at the current time point; or
if there is a conflict with a measurement gap at the current time point, cancel the HARQ transmission of the data at the current time point.

In a possible implementation manner, the determining unit 220 is configured to:
delay a time point for performing the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

In a possible implementation manner, the UE may not implement an operation of performing the HARQ transmission. A specific apparatus configuration method is as follows:
Step 31: When a HARQ process corresponding to the current time point performs the HARQ transmission, if the direction at the current time point changes from the uplink to the downlink, the determining unit 220 cancels the HARQ transmission.
Step 32: The determining unit 220 may change the time point for the HARQ process to perform the HARQ transmission to a subsequent time point that meets a preset condition, for retransmission. Specifically, the retransmission may be performed by using a physical resource or a modulation and coding scheme same as that of last transmission or by using a physical resource or a modulation and coding scheme notified in a retransmission scheduling command, which is not limited herein.

The preset condition may specifically include:
an N^{th} time point for uplink transmission after the current time point, where N is a positive integer, for example, 1, 2, or 3, N being 1 indicates a next time point for the uplink transmission, and in this case, multiple processes may perform the HARQ transmission at the N^{th} time point for the uplink transmission; or
an N^{th} time point for uplink transmission after the current time point, where another process of the UE does not perform the HARQ transmission at the time point, and N being 1 indicates a next time point that can be used for the uplink transmission; or
an N^{th} constant time point used for uplink transmission after the current time point, where N being 1 indicates a next time point that can be used for the uplink transmission, the constant time point used for the uplink transmission includes a constant uplink subframe or a constant special subframe, and the special subframe includes an UpPTS.

Further, in addition to that the direction at the current time point changes from the uplink to the downlink, a condition of canceling, by the determining unit 220, the HARQ transmission may further include the following: The feedback on the last HARQ transmission received by the HARQ process is the ACK, and no retransmission scheduling command is received; or the HARQ process conflicts with the measurement gap at the current time point. That is, when the determining unit 220 cannot perform the HARQ transmission for some reasons, the HARQ transmission is canceled.

The user equipment in this embodiment determines a manner of HARQ transmission performed by the UE at a current time point according to a current quantity of transmission times and a maximum quantity of transmission times that is configured by a base station for the UE, which can ensure a quantity of HARQ transmission times, and improve reliability of data transmission.

### Embodiment 3

FIG. 3 is a structural block diagram of user equipment according to Embodiment 3 of the present invention. As shown in FIG. 3, the user equipment mainly includes:
an acquiring unit 310, configured to receive a HARQ transmission configuration instruction from a base station, where the configuration instruction is used to instruct to adjust a transmission manner of HARQ transmission to asynchronization; and
a determining unit 320, connected to the acquiring unit 310, and configured to determine, according to a scheduling command of the base station, whether the HARQ transmission is performed on data.

In a possible implementation manner, the acquiring unit 320 is configured to:
receive the HARQ transmission configuration instruction from the receiving base station by using a radio resource control RRC protocol message, a Media Access Control layer message, or a physical layer message; or
receive the HARQ transmission configuration instruction from the receiving base station by means of time division duplex TDD.

In a possible implementation manner, an asynchronous HARQ transmission manner is configured for the UE. The base station configures an uplink HARQ transmission manner of the UE to asynchronization. A specific configuration method may be as follows: The base station explicitly configures, by using the radio resource control (Radio Resource Control, RRC) protocol message, the Media Access Control layer message, or the physical layer message, the manner of the uplink HARQ transmission performed by the UE as asynchronization; or the base station implicitly configures, by using a manner of configuring the UE to use a flexible time division duplex (Time Division Duplexing, TDD) configuration, the manner of the uplink HARQ transmission performed by the UE as asynchronization; or the base station implicitly configures, by using a manner of configuring the UE to use another function, the manner of the uplink HARQ transmission performed by the UE as asynchronization.

The UE acquires the configuration of the base station by using the acquiring unit 310, and performs the asynchronous HARQ transmission according to the asynchronous uplink HARQ transmission configured by the base station. In this case, the UE performs the HARQ transmission according to only the scheduling command of the base station.

It should be noted that the method for configuring the UE in this embodiment may be used with reference to the foregoing embodiments, or may be implemented independently.

The user equipment in this embodiment determines a manner of HARQ transmission performed by the UE at a current time point according to a current quantity of transmission times and a maximum quantity of transmission times that is configured by a base station for the UE, which can ensure a quantity of HARQ transmission times, and improve reliability of data transmission.

### Embodiment 4

FIG. 4 is a structural block diagram of user equipment according to Embodiment 4 of the present invention. As shown in FIG. 4, the user equipment mainly includes:
an acquiring unit 310a, configured to receive an uplink-downlink configuration change command from a base station, where the uplink-downlink configuration change command is used to notify the UE of a new uplink-downlink configuration; and
an execution unit 320a, connected to the acquiring unit 310a, and configured to clear an uplink synchronous hybrid automatic repeat request HARQ buffer and/or a downlink HARQ soft buffer according to the new uplink-downlink configuration, or configured to cancel uplink HARQ transmission and/or downlink HARQ transmission according to the new uplink-downlink configuration.

Specifically, in a TDD system, different uplink-downlink subframe configurations are supported to be used by the UE at different time, that is, an uplink-downlink subframe configuration used by the UE may dynamically change among multiple uplink-downlink subframe configurations. As shown in Table 1, directions of some subframes, such as subframes 0, 1, and 2, do not change, which are uplink subframes all the time or downlink subframes all the time, and directions of some subframes change with the used uplink-downlink subframe configurations. As shown in Table 1, when an uplink-downlink configuration of a subframe 4 is 0, a direction of the subframe 4 is uplink; and when the uplink-downlink configuration is 1, the direction of the subframe 4 is downlink.

In addition, as shown in Table 2, for different uplink-downlink configurations, maximum quantities of downlink HARQ processes of the UE are also different.

**Table 2 Maximum quantity of downlink HARQ processes in the time division duplex system**

| **Uplink-downlink configuration** | **Maximum quantity of downlink HARQ processes** |
|---|---|
| 0 | 4 |
| 1 | 7 |
| 2 | 10 |
| 3 | 9 |
| 4 | 12 |
| 5 | 15 |
| 6 | 6 |

As shown in Table 3, for different uplink-downlink configurations, maximum quantities of uplink HARQ processes of the UE are also different.

**Table 3 Maximum quantity of uplink HARQ processes in the time division duplex system**

| **Uplink-downlink configuration** | **Maximum quantity of uplink HARQ processes** |
|---|---|
| 0 | 7 |
| 1 | 4 |
| 2 | 2 |
| 3 | 3 |
| 4 | 2 |
| 5 | 1 |
| 6 | 6 |

Different TDD uplink-downlink configurations may be applicable to different uplink and downlink service volumes. For better adaption to a change in a service volume, the base station may dynamically change a TDD uplink-downlink configuration and notify the UE of a latest TDD uplink-downlink configuration by using an uplink-downlink configuration change command.

The maximum quantity of downlink HARQ processes and the maximum quantity of uplink HARQ processes of the UE change with an uplink-downlink configuration. For example, when the uplink-downlink configuration is 0, the maximum quantity of downlink HARQ processes is 4, and the maximum quantity of uplink HARQ processes is 7; however, when the uplink-downlink configuration changes to 1, the maximum quantity of downlink HARQ processes changes to 7, and the maximum quantity of uplink HARQ processes changes to 4.

When the maximum quantity of downlink HARQ processes of the UE changes from large to small, how to process data, on which processing has not been finished, in a redundant HARQ process, for example, data in a largest HARQ soft buffer, and which process is considered as a redundant process need to be definite; otherwise, the UE may perform needless downlink data processing, and therefore, complexity of processing by the UE is increased.

When the maximum quantity of uplink HARQ processes of the UE changes from large to small, how to process data, on which processing has not been finished, in a redundant HARQ process, for example, data in a HARQ buffer, and which process is considered as a redundant process need to be definite; otherwise, the UE may perform needless uplink data processing, and therefore, complexity of processing by the UE is increased. In addition, because uplink data HARQ transmission is synchronous HARQ transmission, and no HARQ process number is included in an uplink scheduling command, the UE determines a used HARQ process according to a synchronization relationship of a synchronous HARQ transmission. This further increases the complexity of processing by the UE. For example, when processing a downlink subframe, the UE further needs to maintain related processing on an uplink HARQ process.

The execution unit 320a clears the uplink HARQ buffer, which may be clearing data in buffers of all uplink HARQ processes, or clearing, by the UE, data in a HARQ buffer of a redundant uplink HARQ process.

Optionally, when the UE clears the data in the HARQ buffer of the redundant uplink HARQ process, it may be clearing, according to the uplink-downlink configuration notified in the uplink-downlink configuration change command, a HARQ buffer of an uplink HARQ process that cannot perform uplink transmission including retransmission or new transmission. Specifically, an uplink HARQ process that cannot continue to perform uplink transmission may be determined according to an uplink HARQ synchronization relationship.

Further optionally, the execution unit 320a clears the uplink HARQ buffer, which may be performed when or after the acquiring unit 310A receives the uplink-downlink configuration change command, performed when or after the UE applies the uplink-downlink configuration change command, or performed after the UE applies the uplink-downlink configuration change command and when the UE is to perform the uplink HARQ transmission but finds that the HARQ transmission cannot be performed.

Specifically, the execution unit 320a clears the downlink HARQ soft buffer, which may be clearing data in soft buffers of all downlink HARQ processes, or clearing, by the UE, data in a redundant downlink HARQ soft buffer.

Optionally, when the UE clears the data in the HARQ soft buffer of the redundant downlink HARQ process, it may be clearing, according to the uplink-downlink configuration notified in the uplink-downlink configuration change command, a HARQ buffer of a downlink HARQ process that cannot perform downlink transmission including retransmission or new transmission. Specifically, a downlink HARQ process that cannot continue to perform downlink transmission may be determined according to a preconfigured rule. For example, a HARQ process whose HARQ process number is greater than or equal to a quantity of downlink HARQ processes that is corresponding to the uplink-downlink configuration notified in the uplink-downlink configuration change command is determined, according to a HARQ process number, as a HARQ process that cannot continue to perform downlink transmission, and therefore, a soft buffer of the HARQ process is cleared; or a downlink HARQ process that cannot continue to perform downlink transmission may be notified by using a configuration message, and therefore, a soft buffer of the HARQ process is cleared.

Further optionally, the execution unit 320a clears the downlink HARQ soft buffer, which may be performed when or after the acquiring unit 310A receives the uplink-downlink configuration change command, or performed when or after the UE applies the uplink-downlink configuration change command.

Specifically, the execution unit 330a cancels the uplink HARQ transmission, which may be canceling transmission of data of all uplink HARQ processes, or canceling, by the UE, transmission of data of a redundant uplink HARQ process.

Optionally, when the UE cancels the transmission of the data of the redundant uplink HARQ process, it may be canceling, according to the uplink-downlink configuration notified in the uplink-downlink configuration change command, transmission of data of an uplink HARQ process that cannot perform uplink transmission including retransmission or new transmission. Specifically, an uplink HARQ process that cannot continue to perform uplink transmission may be determined according to an uplink HARQ synchronization relationship.

Further optionally, the execution unit 330a cancels the uplink HARQ transmission, which may be performed when or after the acquiring unit 310A receives the uplink-downlink configuration change command, performed when or after the UE applies the uplink-downlink configuration change command, or performed after the UE applies the uplink-downlink configuration change command and when the UE is to perform the uplink HARQ transmission but finds that the HARQ transmission cannot be performed.

Specifically, the execution unit 330a cancels the downlink HARQ transmission, which may be canceling transmission of data in soft buffers of all downlink HARQ processes, or canceling, by the UE, transmission of data in a redundant downlink HARQ soft buffer.

Optionally, when the UE cancels the transmission of the data in the HARQ soft buffer of the redundant downlink HARQ process, it may be canceling, according to the uplink-downlink configuration notified in the uplink-downlink configuration change command, transmission of data in a HARQ buffer of a downlink HARQ process that cannot perform downlink transmission including retransmission or new transmission. Specifically, a downlink HARQ process that cannot continue to perform downlink transmission may be determined according to a preconfigured rule. For example, a HARQ process whose HARQ process number is greater than or equal to a quantity of downlink HARQ processes that is corresponding to the uplink-downlink configuration notified in the uplink-downlink configuration change command is determined, according to a HARQ process number, as a HARQ process that cannot continue to perform downlink transmission, and therefore, transmission of data of the HARQ process is canceled; or a downlink HARQ process that cannot continue to perform downlink transmission may be notified by using a configuration message, and therefore, transmission of data of the HARQ process is canceled.

Further optionally, the execution unit 330a cancels the downlink HARQ transmission, which may be performed when or after the acquiring unit 310A receives the uplink-downlink configuration change command, or performed when or after the UE applies the uplink-downlink configuration change command.

The user equipment in this embodiment performs a processing operation according to a scheduling command of a base station, which can ensure a quantity of HARQ transmission times, improve reliability of data transmission, and reduce complexity of processing by the UE.

### Embodiment 5

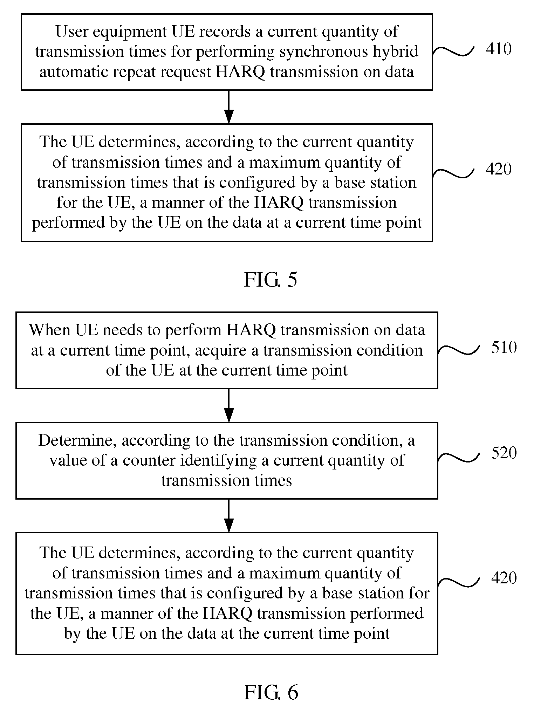

FIG. 5 is a flowchart of an uplink data scheduling method according to Embodiment 5 of the present invention. As shown in FIG. 5, the method mainly includes the following steps:
Step 410: User equipment UE records a current quantity of transmission times for performing synchronous hybrid automatic repeat request HARQ transmission on data.
Step 420: The UE determines, according to the current quantity of transmission times and a maximum quantity of transmission times that is configured by a base station for the UE, a manner of the HARQ transmission performed by the UE on the data at a current time point, where the HARQ transmission manner includes adaptive retransmission and non-adaptive retransmission, the adaptive retransmission refers to performing the HARQ transmission by the UE according to scheduling of the base station, and the non-adaptive retransmission refers to performing the HARQ transmission by the UE according to a preconfiguration, but not necessarily according to the scheduling of the base station.

Further, step 420 may include:
if a value of a counter identifying the current quantity of transmission times is less than or equal to a specified threshold, performing, by the UE, the non-adaptive retransmission or the adaptive retransmission on the data, where the specified threshold is determined according to the maximum quantity of transmission times; or if a value of a counter identifying the current quantity of transmission times is greater than or equal to the specified threshold, buffering, by the UE, the data, and performing, by the UE, the adaptive retransmission on the data according to the scheduling of the base station.

Specifically, the UE includes a HARQ entity, and the HARQ entity may perform multiple HARQ processes. One HARQ process refers to that the base station performs scheduling to perform one data transmission and then the base station receives ACK/NACK information. The UE implements the HARQ transmission by using a HARQ process, and a quantity of HARQ processes refers to a quantity of concurrent HARQs. The HARQ transmission includes HARQ transmission for the first time or HARQ retransmission. In the UE, a HARQ process is associated with a counter identifying a current quantity of HARQ transmission times. Each time a MAC layer of the UE performs one HARQ transmission operation on the data by using a same process, the counter identifying the current quantity of HARQ transmission times increases by one. If the HARQ transmission manner is synchronous non-adaptive retransmission, and if a negative acknowledgement (Negative Acknowledgement, NACK) of the base station is received after the MAC layer of the UE transmits data by using a HARQ process, the UE retransmits the data at a particular time interval by using a same physical resource, a same modulation and coding scheme, and the like. If the HARQ transmission manner is synchronous adaptive retransmission, after the MAC layer of the UE transmits data by using a HARQ process, the MAC layer of the UE retransmits the data at a particular time interval according to a retransmission scheduling command of the base station, such as a physical downlink control channel (Physical Downlink Control Channel, PDCCH), by using a physical resource, a modulation and coding scheme, and the like in the retransmission scheduling command.

After sending the data, if the UE receives the negative acknowledgement (NACK) of the base station, the UE determines whether the current quantity of HARQ transmission times that is identified by the counter is less than or equal to the specified threshold, and if yes, the UE may perform non-adaptive HARQ transmission.

In a possible implementation manner, it may be assumed that when a HARQ process transmits data for the first time, the current quantity of HARQ transmission times that is identified by the counter is 0; in this case, the specified threshold is a value obtained by subtracting one from the maximum quantity of transmission times that is configured by the base station. It may also be assumed that when a HARQ process transmits data for the first time, the current quantity of HARQ transmission times that is identified by the counter is 1, and the specified threshold is the maximum quantity of transmission times that is configured by the base station.

When the current quantity of HARQ transmission times that is identified by the counter is equal to the specified threshold, if the UE does not receive an acknowledgement from the base station, the UE no longer performs the non-adaptive retransmission, but stores the data in a corresponding HARQ buffer.

It should be noted that the HARQ process of the UE may perform the foregoing determining and operation, or the HARQ entity may perform the foregoing determining and operation. When the HARQ process performs the foregoing determining and operation, it may be specifically: after a HARQ process of the UE receives a notification, from the HARQ entity, of performing the non-adaptive retransmission, determining whether the current quantity of HARQ transmission times that is identified by the counter associated with the HARQ process is less than or equal to the specified threshold, and if yes, performing the non-adaptive retransmission. When the HARQ entity performs the foregoing determining and operation, it may be specifically: before the HARQ entity of the UE instructs a HARQ process corresponding to the current time point to perform the non-adaptive HARQ transmission, determining whether the counter that is associated with the HARQ process and that identifies the current quantity of HARQ transmission times is less than or equal to the specified threshold configured by the base station, and if yes, instructing the HARQ process to perform the non-adaptive HARQ transmission.

If the current quantity of HARQ transmission times that is identified by the counter is greater than or equal to the specified threshold configured by the base station, and if the UE receives the retransmission scheduling command of the base station, the UE performs the adaptive retransmission according to the scheduling command.

It should be noted that when the current quantity of HARQ transmission times that is identified by the counter is less than or equal to the specified threshold, the UE may also perform the adaptive retransmission according to the retransmission scheduling command of the base station.

In a possible implementation manner, the base station may configure the UE, so that the UE performs the foregoing function. Specifically, the base station may use a protocol form, a broadcast message, or a dedicated message to configure the UE, so that the UE performs the foregoing function. The dedicated message may specifically include an RRC message, a MAC layer message, or a PHY layer message. Specifically, the UE may also be explicitly configured by adding a new information element to an existing message, for example, adding one bit to instruct the UE to enable the foregoing function; or the UE is implicitly configured by using another information element, for example, after enabling a function of a flexible TDD configuration is configured for the UE, the foregoing function is enabled automatically, which are not described herein again.

According to the uplink data scheduling method in this embodiment, a manner of HARQ transmission performed by UE at a current time point is determined according to a current quantity of transmission times and a maximum quantity of transmission times that is configured by a base station for the UE, which can ensure a quantity of HARQ transmission times, and improve reliability of data transmission.

### Embodiment 6

FIG. 6 is a flowchart of an uplink data scheduling method according to Embodiment 6 of the present invention. A step in FIG. 6 that has a same reference sign as a step in FIG. 5 has a same function as the step in FIG. 5. For brevity, detailed description of the step is omitted.

As shown in FIG. 6, a main difference between the method shown in FIG. 6 and the method shown in FIG. 5 lies in: in a possible implementation manner, step 410 may specifically include:
Step 510: When the UE needs to perform the HARQ transmission on the data at a current time point, acquire a transmission condition of the UE at the current time point.
Step 520: Determine, according to the transmission condition, a value of a counter identifying the current quantity of transmission times.

Further, step 520 may include:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   the UE acquires that a transmission direction at the current time point is downlink when the HARQ process performs retransmission at the current time point; or
   a feedback on last HARQ transmission received by the HARQ process is an acknowledgement ACK, and no HARQ scheduling command of the base station is received; or
   the HARQ process conflicts with a measurement gap at the current time point.

According to the uplink data scheduling method in this embodiment, a manner of HARQ transmission performed by UE at a current time point is determined according to a current quantity of transmission times and a maximum quantity of transmission times that is configured by a base station for the UE, and when the HARQ transmission is canceled because of a conflict, a quantity of transmission times that is identified by a counter does not increase, which can ensure a quantity of HARQ transmission times, and improve reliability of data transmission.

It can be understood that the uplink data scheduling method in this embodiment of the present invention may also be implemented independently, that is, only step 510 and step 520 are performed, and a counting rule of the counter is changed to ensure the quantity of HARQ transmission times, and improve the reliability of the data transmission.

### Embodiment 7

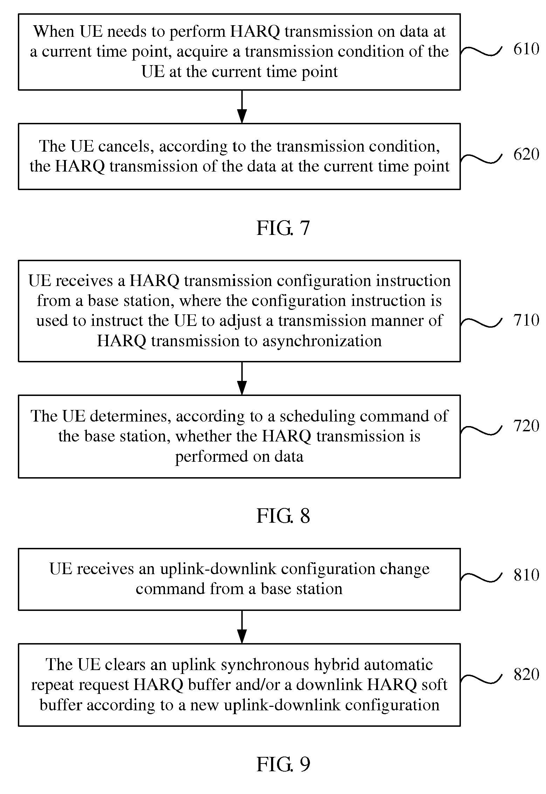

FIG. 7 is a flowchart of an uplink data scheduling method according to Embodiment 7 of the present invention. As shown in FIG. 7, the method mainly includes the following steps:
Step 610: When UE needs to perform HARQ transmission on data at a current time point, acquire a transmission condition of the UE at the current time point.
Step 620: The UE cancels the HARQ transmission of the data at the current time point according to the transmission condition.

Specifically, in a time division duplex (Time Division Duplexing, TDD) system, different uplink-downlink subframe configurations are supported to be used by the UE at different time, that is, an uplink-downlink subframe configuration used by the UE may dynamically change among multiple uplink-downlink subframe configurations. As shown in Table 1, directions of some subframes, such as subframes 0, 1, and 2, do not change, which are uplink subframes all the time or downlink subframes all the time, and directions of some subframes change with the used uplink-downlink subframe configurations. As shown in the following table, when an uplink-downlink configuration of a subframe 4 is 0, a direction of the subframe 4 is uplink; and when the uplink-downlink configuration is 1, the direction of the subframe 4 is downlink. Further, step 620 includes:
if a transmission direction of the UE at the current time point is uplink, performing, by the UE, the HARQ transmission on the data at the current time point, or if the transmission direction is downlink, canceling, by the UE, the HARQ transmission of the data at the current time point; or
if a feedback on last HARQ transmission received by the UE is an ACK, and no HARQ scheduling command of the base station is received, canceling, by the UE, the HARQ transmission of the data at the current time point; or
if the UE conflicts with a measurement gap at the current time point, canceling, by the UE, the HARQ transmission of the data at the current time point.

Further optionally, after step 620, the method may specifically include:
delaying, by the UE, a time point for performing the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS (up Pilot Time Slot, UpPTS).

According to the uplink data scheduling method in this embodiment, a manner of HARQ transmission performed by UE at a current time point is determined according to a current quantity of transmission times and a maximum quantity of transmission times that is configured by a base station for the UE, and when the HARQ transmission is performed by changing to another transmission point because of a conflict, a quantity of HARQ transmission times can be ensured, and reliability of data transmission is improved.

### Embodiment 8

FIG. 8 is a flowchart of an uplink data scheduling method according to Embodiment 8 of the present invention. As shown in FIG. 8, the method mainly includes the following steps:
Step 710: UE receives a HARQ transmission configuration instruction from a base station, where the configuration instruction is used to instruct the UE to adjust a transmission manner of HARQ transmission to asynchronization.
Step 720: The UE determines, according to a scheduling command of the base station, whether the HARQ transmission is performed on data.

In a possible implementation manner, step 710 may include:
receiving, by the UE, the HARQ transmission configuration instruction from the receiving base station by using a radio resource control (Radio Resource Control, RRC) protocol message, a Media Access Control layer message, or a physical layer message. Specifically, the UE may also be explicitly configured by adding a new information element to an existing message, for example, adding one bit to instruct the UE to enable the foregoing function; or the UE is implicitly configured by using another information element, for example, after enabling a function of a flexible TDD configuration is configured for the UE, the foregoing function is enabled automatically, which are not described herein again.

According to the uplink data scheduling method in this embodiment, UE performs HARQ transmission according to a scheduling command of a base station, which can ensure a quantity of HARQ transmission times, and improve reliability of data transmission.

### Embodiment 9

FIG. 9 is a flowchart of an uplink data scheduling method according to Embodiment 9 of the present invention. As shown in FIG. 9, the method mainly includes the following steps:
Step 810: UE receives an uplink-downlink configuration change command from a base station, where the uplink-downlink configuration change command is used to notify the UE of a new uplink-downlink configuration.

Specifically, in a time division duplex (Time Division Duplexing, TDD) system, different uplink-downlink subframe configurations are supported to be used by the UE at different time, that is, an uplink-downlink subframe configuration used by the UE may dynamically change among multiple uplink-downlink subframe configurations. As shown in Table 1, directions of some subframes, such as subframes 0, 1, and 2, do not change, which are uplink subframes all the time or downlink subframes all the time, and directions of some subframes change with the used uplink-downlink subframe configurations. As shown in Table 1, when an uplink-downlink configuration of a subframe 4 is 0, a direction of the subframe 4 is uplink; and when the uplink-downlink configuration is 1, the direction of the subframe 4 is downlink.

In addition, as shown in Table 2, for different uplink-downlink configurations, maximum quantities of downlink HARQ processes of the UE are also different; and as shown in Table 3, for different uplink-downlink configurations, maximum quantities of uplink HARQ processes of the UE are also different.

Different TDD uplink-downlink configurations may be applicable to different uplink and downlink service volumes. For better adaption to a change in a service volume, the base station may dynamically change a TDD uplink-downlink configuration and notify the UE of a latest TDD uplink-downlink configuration by using an uplink-downlink configuration change command.

A maximum quantity of downlink HARQ processes and a maximum quantity of uplink HARQ processes of the UE change with an uplink-downlink configuration. For example, when the uplink-downlink configuration is 0, the maximum quantity of downlink HARQ processes is 4, and the maximum quantity of uplink HARQ processes is 7; however, when the uplink-downlink configuration changes to 1, the maximum quantity of downlink HARQ processes changes to 7, and the maximum quantity of uplink HARQ processes changes to 4.

When the maximum quantity of downlink HARQ processes of the UE changes from large to small, how to process data, on which processing has not been finished, in a redundant HARQ process, for example, data in a largest HARQ soft buffer, and which process is considered as a redundant process need to be definite; otherwise, the UE may perform needless downlink data processing, and therefore, complexity of processing by the UE is increased.

When the maximum quantity of uplink HARQ processes of the UE changes from large to small, how to process data, on which processing has not been finished, in a redundant HARQ process, for example, data in a HARQ buffer, and which process is considered as a redundant process need to be definite; otherwise, the UE may perform needless uplink data processing, and therefore, complexity of processing by the UE is increased. In addition, because uplink data HARQ transmission is synchronous HARQ transmission, and no HARQ process number is included in an uplink scheduling command, the UE determines a used HARQ process according to a synchronization relationship of a synchronous HARQ. This further increases the complexity of processing by the UE. For example, when processing a downlink subframe, the UE further needs to maintain related processing on an uplink HARQ process.

Step 820: The UE clears an uplink synchronous hybrid automatic repeat request HARQ buffer and/or a downlink HARQ soft buffer according to the new uplink-downlink configuration.

Specifically, the UE clears the uplink HARQ buffer, which may be clearing, by the UE, data in the uplink HARQ buffers of all the uplink HARQ processes, or clearing, by the UE, data in the uplink HARQ buffer of the redundant uplink HARQ process.

Optionally, when the UE clears the data in the HARQ buffer of the redundant uplink HARQ process, it may be clearing, according to the uplink-downlink configuration notified in the uplink-downlink configuration change command, a HARQ buffer of an uplink HARQ process that cannot perform uplink transmission including retransmission or new transmission.

Specifically, an uplink HARQ process that cannot continue to perform uplink transmission may be determined according to an uplink HARQ synchronization relationship.

Further optionally, the UE clears the uplink HARQ buffer, which may be performed when or after the UE receives the uplink-downlink configuration change command, performed when or after the UE applies the uplink-downlink configuration change command, or performed after the UE applies the uplink-downlink configuration change command and when the UE is to perform uplink HARQ transmission but finds that the HARQ transmission cannot be performed.

Specifically, the UE clears the downlink HARQ soft buffer, which may be clearing, by the UE, data in the downlink HARQ soft buffers of all the downlink HARQ processes, or clearing, by the UE, data in the downlink HARQ soft buffer of the redundant downlink HARQ process.

Optionally, when the UE clears the data in the HARQ soft buffer of the redundant downlink HARQ process, it may be clearing, according to the uplink-downlink configuration notified in the uplink-downlink configuration change command, a HARQ buffer of a downlink HARQ process that cannot perform downlink transmission including retransmission or new transmission. Specifically, a downlink HARQ process that cannot continue to perform downlink transmission may be determined according to a preconfigured rule. For example, a HARQ process whose HARQ process number is greater than or equal to a quantity of downlink HARQ processes that is corresponding to the uplink-downlink configuration notified in the uplink-downlink configuration change command is determined, according to a HARQ process number, as a HARQ process that cannot continue to perform downlink transmission, and therefore, a soft buffer of the HARQ process is cleared; or a downlink HARQ process that cannot continue to perform downlink transmission may be notified by using a configuration message, and therefore, a soft buffer of the HARQ process is cleared.

Further optionally, the UE clears the downlink HARQ soft buffer, which may be performed when or after the UE receives the uplink-downlink configuration change command, or performed when or after the UE applies the uplink-downlink configuration change command.

According to the uplink data scheduling method in this embodiment, UE performs a processing operation according to a scheduling command of a base station, which can improve reliability of data transmission, and reduce complexity of processing by the UE.

### Embodiment 10

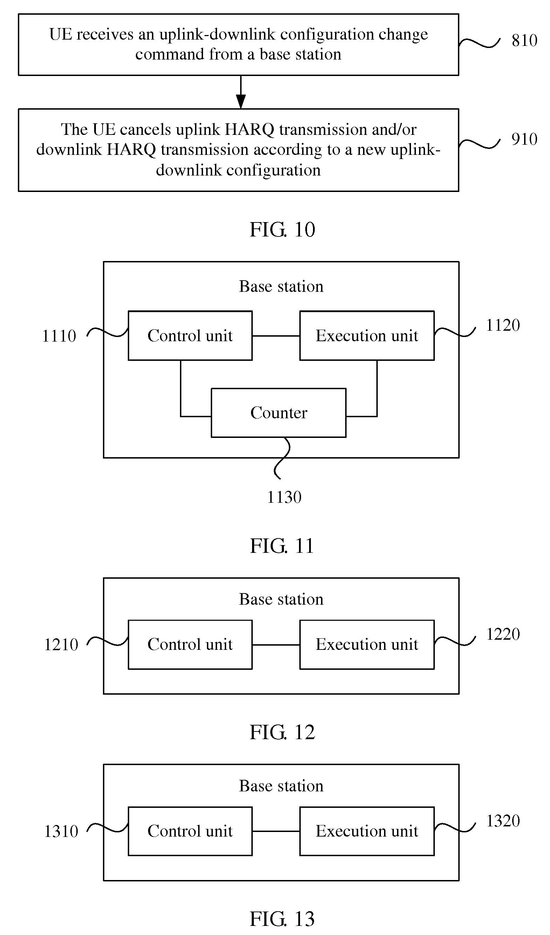

FIG. 10 is a flowchart of an uplink data scheduling method according to Embodiment 10 of the present invention. A step in FIG. 10 that has a same reference sign as a step in FIG. 9 has a same function as the step in FIG. 9. For brevity, detailed description of the step is omitted.

As shown in FIG. 10, a main difference between the method shown in FIG. 10 and the method shown in FIG. 9 lies in: in a possible implementation manner, after step 810, the method may further specifically include:
Step 910: The UE cancels uplink HARQ transmission and/or downlink HARQ transmission according to the new uplink-downlink configuration.

Specifically, the UE cancels the uplink HARQ transmission, which may be canceling, by the UE, transmission of data of all the uplink HARQ processes, or canceling, by the UE, transmission of data of the redundant uplink HARQ process.

Optionally, when the UE cancels the transmission of the data of the redundant uplink HARQ process, it may be canceling, according to the uplink-downlink configuration notified in the uplink-downlink configuration change command, transmission of data of an uplink HARQ process that cannot perform uplink transmission including retransmission or new transmission. Specifically, an uplink HARQ process that cannot continue to perform uplink transmission may be determined according to an uplink HARQ synchronization relationship.

Further optionally, the UE cancels the uplink HARQ transmission, which may be performed when or after the UE receives the uplink-downlink configuration change command, performed when or after the UE applies the uplink-downlink configuration change command, or performed after the UE applies the uplink-downlink configuration change command and when the UE is to perform the uplink HARQ transmission but finds that the HARQ transmission cannot be performed.

Specifically, the UE cancels the downlink HARQ transmission, which may be canceling, by the UE, transmission of data in soft buffers of all the downlink HARQ processes, or canceling, by the UE, transmission of data in the redundant downlink HARQ soft buffer.

Optionally, when the UE cancels the transmission of the data in the HARQ soft buffer of the redundant downlink HARQ process, it may be canceling, according to the uplink-downlink configuration notified in the uplink-downlink configuration change command, transmission of data in a HARQ buffer of a downlink HARQ process that cannot perform downlink transmission including retransmission or new transmission.

Specifically, a downlink HARQ process that cannot continue to perform downlink transmission may be determined according to a preconfigured rule. For example, a HARQ process whose HARQ process number is greater than or equal to a quantity of downlink HARQ processes that is corresponding to the uplink-downlink configuration notified in the uplink-downlink configuration change command is determined, according to a HARQ process number, as a HARQ process that cannot continue to perform downlink transmission, and therefore, transmission of data of the HARQ process is canceled; or a downlink HARQ process that cannot continue to perform downlink transmission may be notified by using a configuration message, and therefore, transmission of data of the HARQ process is canceled.

Further optionally, the UE cancels the downlink HARQ transmission, which may be performed when or after the UE receives the uplink-downlink configuration change command, or performed when or after the UE applies the uplink-downlink configuration change command.

According to the uplink data scheduling method in this embodiment, UE performs a processing operation according to a scheduling command of a base station, which can improve reliability of data transmission, and reduce complexity of processing.

### Embodiment 11

FIG. 11 is a structural block diagram of a base station according to Embodiment 11 of the present invention. As shown in FIG. 11, the base station mainly includes:
a control unit 1110, configured to: configure a maximum quantity of transmission times for UE, and record a current quantity of transmission times for the UE to perform synchronous hybrid automatic repeat request HARQ transmission on data; and
an execution unit 1120, connected to the control unit 1110, and configured to determine, according to the current quantity of transmission times of the UE and the maximum quantity of transmission times, a manner of the HARQ transmission performed by the UE on the data at a current time point.

In a possible implementation manner, the control unit 1110 is configured to:
when the UE needs to perform the HARQ transmission on the data at the current time point, acquire a transmission condition of the UE at the current time point; and
the base station further includes:
   a counter 1130, connected to the control unit 1110 and the execution unit 1120, and configured to determine, according to the transmission condition, a value of the counter identifying the current quantity of transmission times.

In a possible implementation manner, the execution unit 1120 is configured to:
increase the counter by one if a HARQ entity in the UE notifies a HARQ process that the HARQ transmission needs to be performed on the data at the current time point, and decrease the counter by one if the HARQ process cancels the HARQ transmission of the data at the current time point according to the transmission condition; or
increase the counter by one if a HARQ entity in the UE notifies a HARQ process that the HARQ transmission needs to be performed on the data at the current time point, and keep the counter unchanged if the HARQ process cancels the HARQ transmission of the data at the current time point according to the transmission condition; or
increase the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   a transmission direction at the current time point is downlink; or
   the HARQ process sends no scheduling command; or
   the HARQ process conflicts with a measurement gap at the current time point.

In a possible implementation manner, the execution unit 1120 is configured to:
if the value of the counter identifying the current quantity of transmission times is less than or equal to a specified threshold, enable the UE to perform the non-adaptive retransmission or the adaptive retransmission on the data, where the specified threshold is determined according to the maximum quantity of transmission times; or if the value of the counter identifying the current quantity of transmission times is greater than or equal to the specified threshold, enable the UE to perform the adaptive retransmission on the data according to a scheduling command.

In a possible implementation manner, the execution unit 1120 is configured to:
delay a time point for the UE to perform the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

The base station in this embodiment determines, according to a current quantity of transmission times and a maximum quantity of transmission times that is configured for UE, a manner of HARQ transmission performed by the UE at a current time point, which can ensure a quantity of HARQ transmission times, and improve reliability of data transmission.

### Embodiment 12

FIG. 12 is a structural block diagram of a base station according to Embodiment 12 of the present invention. As shown in FIG. 12, the base station mainly includes:
a control unit 1210, configured to send a HARQ transmission configuration instruction to UE, where the configuration instruction is used to instruct the UE to adjust a transmission manner of HARQ transmission to asynchronization; and
an execution unit 1220, connected to the control unit 1210, and configured to send a scheduling command to the UE, so that the UE performs the HARQ transmission on data.

In a possible implementation manner, the control unit 1210 is configured to:
send the HARQ transmission configuration instruction to the UE by using a radio resource control RRC protocol message, a Media Access Control layer message, or a physical layer message.

The base station in this embodiment determines, according to a current quantity of transmission times and a maximum quantity of transmission times that is configured for UE, a manner of HARQ transmission performed by the UE at a current time point, which can ensure a quantity of HARQ transmission times, and improve reliability of data transmission.

### Embodiment 13

FIG. 13 is a structural block diagram of a base station according to Embodiment 13 of the present invention. As shown in FIG. 13, the base station mainly includes:
a control unit 1310, configured to send an uplink-downlink configuration change command to UE, where the uplink-downlink configuration change command is used to notify the UE of a new uplink-downlink configuration; and
an execution unit 1320, connected to the control unit 1310, and configured to clear an uplink synchronous hybrid automatic repeat request HARQ soft buffer and/or a downlink HARQ buffer of the UE according to the new uplink-downlink configuration, or configured to cancel uplink HARQ transmission and/or downlink HARQ transmission of the UE according to the new uplink-downlink configuration.

In a possible implementation manner, the execution unit 1320 is configured to:
clear data in the uplink HARQ buffers of all the uplink HARQ processes of the UE, or clear data in the uplink HARQ soft buffer of the redundant uplink HARQ process of the UE, and/or
clear data in the downlink HARQ buffers of all the downlink HARQ processes of the UE, or clear data in the downlink HARQ buffer of the redundant downlink HARQ process of the UE; or
cancel transmission of data of all the uplink HARQ processes of the UE, or cancel transmission of data of the redundant uplink HARQ process of the UE, and/or
cancel transmission of data in buffers of all the downlink HARQ processes of the UE, or cancel transmission of data in the redundant downlink HARQ buffer of the UE.

In a possible implementation manner, the execution unit 1320 is configured to:
clear, according to the uplink-downlink configuration notified in the new uplink-downlink configuration change command, the HARQ soft buffer of an uplink HARQ process that is of the UE and that cannot perform the uplink HARQ transmission, and/or
clear, according to the uplink-downlink configuration notified in the uplink-downlink configuration change command, the HARQ buffer of the downlink HARQ process that is of the UE and that cannot perform the downlink HARQ transmission; or
cancel, according to the uplink-downlink configuration notified in the uplink-downlink configuration change command, transmission of data in the HARQ soft buffer of the uplink HARQ process that is of the UE and that cannot perform the uplink HARQ transmission, and/or
cancel, according to the uplink-downlink configuration notified in the uplink-downlink configuration change command, transmission of data in the HARQ soft buffer of the downlink HARQ process that is of the UE and that cannot perform the downlink HARQ transmission.

The base station in this embodiment determines, according to a current quantity of transmission times and a maximum quantity of transmission times that is configured for UE, a manner of HARQ transmission performed by the UE at a current time point, which can ensure a quantity of HARQ transmission times, and improve reliability of data transmission.

### Embodiment 14

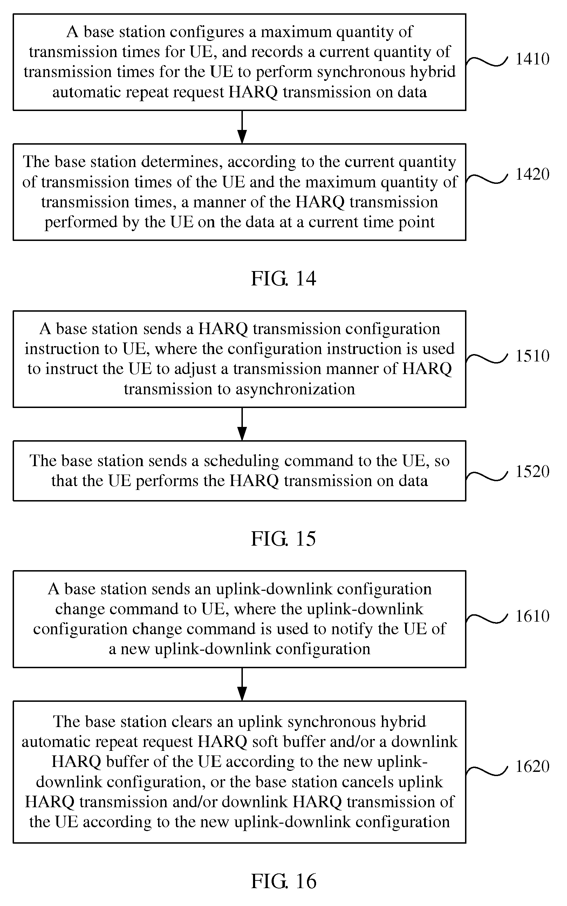

FIG. 14 is a flowchart of an uplink data scheduling method according to Embodiment 14 of the present invention. As shown in FIG. 14, the method mainly includes the following steps:
Step 1410: A base station configures a maximum quantity of transmission times for UE, and records a current quantity of transmission times for the UE to perform synchronous hybrid automatic repeat request HARQ transmission on data.
Step 1420: The base station determines, according to the current quantity of transmission times of the UE and the maximum quantity of transmission times, a manner of the HARQ transmission performed by the UE on the data at a current time point.

Specifically, step 1410 may include:
when the UE needs to perform the HARQ transmission on the data at the current time point, acquiring a transmission condition of the UE at the current time point; and
determining, according to the transmission condition, a value of a counter identifying the current quantity of transmission times.

Step 1420 may specifically include:
if the value of the counter identifying the current quantity of transmission times is less than or equal to a specified threshold, enabling the UE to perform the non-adaptive retransmission or the adaptive retransmission on the data, where the specified threshold is determined according to the maximum quantity of transmission times; or if the value of the counter identifying the current quantity of transmission times is greater than or equal to the specified threshold, enabling the UE to perform the adaptive retransmission on the data according to scheduling of the base station.

Further, the determining, according to the transmission condition, a value of a counter identifying the current quantity of transmission times may include:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   the base station acquires that a transmission direction at the current time point is downlink when the HARQ process performs retransmission at the current time point; or
   a feedback on last HARQ transmission received by the HARQ process is an acknowledgement ACK, and the base station sends no HARQ scheduling command; or
   the HARQ process conflicts with a measurement gap at the current time point.

Further, the increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition may further include:
delaying, by the base station, a time point for the UE to perform the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

According to the uplink data scheduling method in this embodiment, a manner of HARQ transmission performed by UE at a current time point is determined according to a current quantity of transmission times and a maximum quantity of transmission times that is configured by a base station for the UE, which can ensure a quantity of HARQ transmission times, and improve reliability of data transmission.

### Embodiment 15

FIG. 15 is a flowchart of an uplink data scheduling method according to Embodiment 15 of the present invention. As shown in FIG. 15, the method mainly includes the following steps:
Step 1510: A base station sends a HARQ transmission configuration instruction to UE, where the configuration instruction is used to instruct the UE to adjust a transmission manner of HARQ transmission to asynchronization.
Step 1520: The base station sends a scheduling command to the UE, so that the UE performs the HARQ transmission on data.
Step 1510 may specifically include:
   sending, by the base station, the HARQ transmission configuration instruction to the UE by using a radio resource control RRC protocol message, a Media Access Control layer message, or a physical layer message.

According to the uplink data scheduling method in this embodiment, a manner of HARQ transmission performed by UE at a current time point is determined according to a current quantity of transmission times and a maximum quantity of transmission times that is configured by a base station for the UE, which can ensure a quantity of HARQ transmission times, and improve reliability of data transmission.

### Embodiment 16

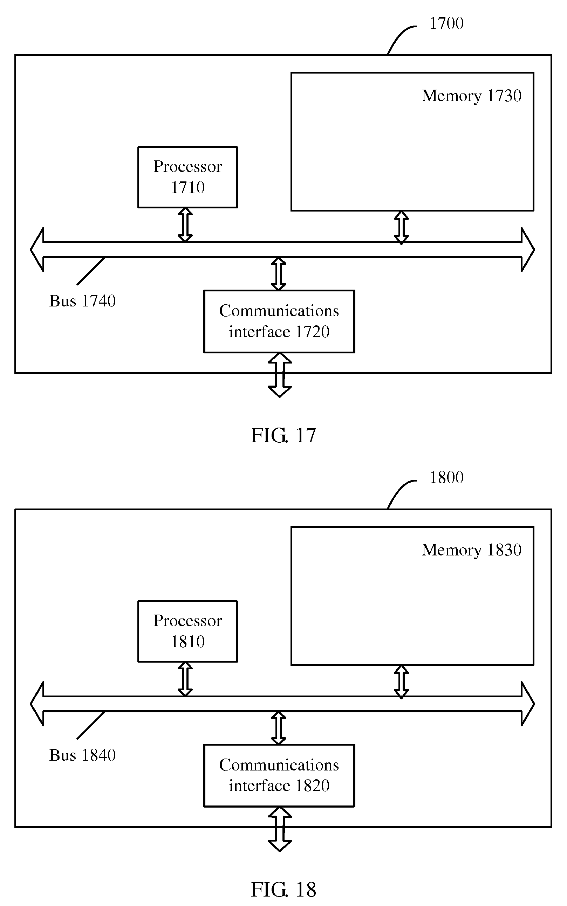

FIG. 16 is a flowchart of an uplink data scheduling method according to Embodiment 16 of the present invention. As shown in FIG. 17, the method mainly includes the following steps:
Step 1610: A base station sends an uplink-downlink configuration change command to UE, where the uplink-downlink configuration change command is used to notify the UE of a new uplink-downlink configuration.
Step 1620: The base station clears an uplink synchronous hybrid automatic repeat request HARQ soft buffer and/or a downlink HARQ buffer of the UE according to the new uplink-downlink configuration, or the base station cancels uplink HARQ transmission and/or downlink HARQ transmission of the UE according to the new uplink-downlink configuration.
Step 1620 may be specifically divided into the following cases:
   Case 1: The base station clears data in the uplink HARQ buffers of all the uplink HARQ processes of the UE, or the base station clears data in the uplink HARQ soft buffer of the redundant uplink HARQ process of the UE. Further, the clearing, by the base station, data in the uplink HARQ soft buffer of the redundant uplink HARQ process of the UE includes clearing, by the base station according to the uplink-downlink configuration notified in the new uplink-downlink configuration change command, the HARQ soft buffer of an uplink HARQ process that is of the UE and that cannot perform the uplink HARQ transmission.
   Case 2: The base station clears data in the downlink HARQ buffers of all the downlink HARQ processes of the UE, or the base station clears data in the downlink HARQ buffer of the redundant downlink HARQ process of the UE. Further, the clearing, by the base station, data in the downlink HARQ buffer of the redundant downlink HARQ process of the UE includes clearing, by the base station according to the uplink-downlink configuration notified in the uplink-downlink configuration change command, the HARQ buffer of the downlink HARQ process that is of the UE and that cannot perform the downlink HARQ transmission.
   Case 3: The base station cancels transmission of data of all the uplink HARQ processes of the UE, or the base station cancels transmission of data of the redundant uplink HARQ process of the UE. Further, the canceling, by the base station, transmission of data of the redundant uplink HARQ process of the UE includes canceling, by the base station according to the uplink-downlink configuration notified in the uplink-downlink configuration change command, transmission of data in the HARQ soft buffer of the uplink HARQ process that is of the UE and that cannot perform the uplink HARQ transmission.
   Case 4: The base station cancels transmission of data in buffers of all the downlink HARQ processes of the UE, or the base station cancels transmission of data in the redundant downlink HARQ buffer of the UE. Further, the canceling, by the base station, transmission of data in the redundant downlink HARQ buffer of the UE includes canceling, by the base station according to the uplink-downlink configuration notified in the uplink-downlink configuration change command, transmission of data in the HARQ soft buffer of the downlink HARQ process that is of the UE and that cannot perform the downlink HARQ transmission.

According to the uplink data scheduling method in this embodiment, a manner of HARQ transmission performed by UE at a current time point is determined according to a current quantity of transmission times and a maximum quantity of transmission times that is configured by a base station for the UE, which can ensure a quantity of HARQ transmission times, and improve reliability of data transmission.

### Embodiment 17

FIG. 17 is a structural block diagram of user equipment according to Embodiment 17 of the present invention. The user equipment 1700 may be a host server, a personal computer PC, a portable computer, a terminal, or the like that has a computing capability. Specific implementation of a computing node is not limited in a specific embodiment of the present invention.

The user equipment 1700 includes a processor (processor) 1710, a communications interface (Communications Interface) 1720, a memory (memory) 1730, and a bus 1740. The processor 1710, the communications interface 1720, and the memory 1730 communicate with each other by using the bus 1740.

The communications interface 1720 is configured to communicate with a network device, where the network device includes, for example, a virtual machine management center and shared storage.

The processor 1710 is configured to perform a program. The processor 1710 may be a central processing unit CPU, an application-specific integrated circuit ASIC (Application Specific Integrated Circuit), or one or more integrated circuits configured to implement this embodiment of the present invention.

The memory 1730 is configured to store a file. The memory 1730 may include a high-speed RAM memory, and may further include a non-volatile memory (non-volatile memory), for example, at least one disk memory. The memory 1730 may also be a memory array. The memory 1730 may further be divided into blocks, and the blocks may be combined into a virtual volume according to a particular rule.

In a possible implementation manner, the program may be program code including a computer operation instruction. The program may be specifically configured to:
record a current quantity of transmission times for performing synchronous hybrid automatic repeat request HARQ transmission on data; and
determine, according to the current quantity of transmission times and a maximum quantity of transmission times that is configured by a base station for the UE, a manner of the HARQ transmission performed by the UE on the data at a current time point, where the HARQ transmission manner includes adaptive retransmission and non-adaptive retransmission.

In a possible implementation manner, the recording a current quantity of transmission times for performing HARQ transmission on data includes:
when the UE needs to perform the HARQ transmission on the data at the current time point, acquiring a transmission condition of the UE at the current time point; and
determining, according to the transmission condition, a value of a counter identifying the current quantity of transmission times.

In a possible implementation manner, the determining, according to the transmission condition, a value of a counter identifying the current quantity of transmission times includes:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   the UE acquires that a transmission direction at the current time point is downlink when the HARQ process performs retransmission at the current time point; or
   a feedback on last HARQ transmission received by the HARQ process is an acknowledgement ACK, and no HARQ scheduling command of the base station is received; or
   the HARQ process conflicts with a measurement gap at the current time point.

In a possible implementation manner, the determining, according to the current quantity of transmission times and a maximum quantity of transmission times that is configured by a base station for the UE, a manner of the HARQ transmission performed by the UE at a current time point includes:
if the value of the counter identifying the current quantity of transmission times is less than or equal to a specified threshold, performing, by the UE, the non-adaptive retransmission or the adaptive retransmission on the data, where the specified threshold is determined according to the maximum quantity of transmission times; or if the value of the counter identifying the current quantity of transmission times is greater than or equal to the specified threshold, performing, by the UE, the adaptive retransmission on the data according to scheduling of the base station.

The program may further be specifically configured to:
when the UE needs to perform the HARQ transmission on the data at the current time point, acquire a transmission condition of the UE at the current time point; and
cancel the HARQ transmission of the data at the current time point according to the transmission condition.

In a possible implementation manner, the canceling the HARQ transmission of the data at the current time point according to the transmission condition includes:
if a transmission direction of the UE at the current time point is uplink, performing, by the UE, the HARQ transmission on the data at the current time point, or if the transmission direction is downlink, canceling, by the UE, the HARQ transmission of the data at the current time point; or
if a feedback on last HARQ transmission received by the UE is an ACK, and no HARQ scheduling command of the base station is received, canceling, by the UE, the HARQ transmission of the data at the current time point; or
if the UE conflicts with a measurement gap at the current time point, canceling, by the UE, the HARQ transmission of the data at the current time point.

In a possible implementation manner, after the determining, by the UE, to cancel the HARQ transmission of the data at the current time point according to the transmission condition, the following is further included:
delay a time point for performing the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

The program may further be specifically configured to:
receive a HARQ transmission configuration instruction from the base station, where the configuration instruction is used to instruct the UE to adjust a transmission manner of HARQ transmission to asynchronization; and
determine, according to a scheduling command of the base station, whether the HARQ transmission is performed on data.

In a possible implementation manner, the receiving a HARQ transmission configuration instruction from the base station includes:
receiving the HARQ transmission configuration instruction from the receiving base station by using a radio resource control RRC protocol message, a Media Access Control layer message, or a physical layer message.

The program may further be specifically configured to:
receive an uplink-downlink configuration change command from the base station, where the uplink-downlink configuration change command is used to notify the UE of a new uplink-downlink configuration; and
clear an uplink synchronous hybrid automatic repeat request HARQ buffer and/or a downlink HARQ soft buffer according to the new uplink-downlink configuration, or cancel, by the UE, uplink HARQ transmission and/or downlink HARQ transmission according to the new uplink-downlink configuration.

In a possible implementation manner, the clearing an uplink HARQ buffer according to the new uplink-downlink configuration includes:
clearing data in the uplink HARQ buffers of all the uplink HARQ processes, or clearing, by the UE, data in the uplink HARQ buffer of the redundant uplink HARQ process;
the clearing a downlink HARQ soft buffer according to the new uplink-downlink configuration includes:
clearing data in the downlink HARQ soft buffers of all the downlink HARQ processes, or clearing data in the downlink HARQ soft buffer of the redundant downlink HARQ process;
the canceling uplink HARQ transmission according to the new uplink-downlink configuration includes:
   canceling transmission of data of all the uplink HARQ processes, or canceling, by the UE, transmission of data of the redundant uplink HARQ process; and
the canceling, by the UE, downlink HARQ transmission according to the new uplink-downlink configuration includes:
   canceling transmission of data in soft buffers of all the downlink HARQ processes, or canceling, by the UE, transmission of data in the redundant downlink HARQ soft buffer.

In a possible implementation manner, the clearing data in the uplink HARQ buffer of the redundant uplink HARQ process includes:
clearing, according to the uplink-downlink configuration notified in the new uplink-downlink configuration change command, the HARQ buffer of an uplink HARQ process that cannot perform the uplink HARQ transmission;
the clearing data in the downlink HARQ soft buffer of the redundant downlink HARQ process includes:
   clearing, according to the uplink-downlink configuration notified in the uplink-downlink configuration change command, the HARQ buffer of the downlink HARQ process that cannot perform the downlink HARQ transmission;
the canceling, by the UE, transmission of data of the redundant uplink HARQ process includes:
   canceling, according to the uplink-downlink configuration notified in the uplink-downlink configuration change command, transmission of data in the HARQ buffer of the uplink HARQ process that cannot perform the uplink HARQ transmission; and
the canceling transmission of data in the redundant downlink HARQ soft buffer includes:
   canceling, according to the uplink-downlink configuration notified in the uplink-downlink configuration change command, transmission of data in the HARQ buffer of the downlink HARQ process that cannot perform the downlink HARQ transmission.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the present invention.

If the functions are implemented by computer software and are sold or used as independent products, it may be deemed, to some extent, that all or part (such as the part that contributes to the prior art) of the technical solutions of the present invention is embodied by a computer software product. The computer software product is generally stored in a computer readable non-volatile storage medium and includes several instructions for instructing a computer device (which may be a personal computer, a server, or a network device, and the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

### Embodiment 18

FIG. 18 is a structural block diagram of a base station according to Embodiment 18 of the present invention. The base station 1800 may be a host server, a personal computer PC, a portable computer, a terminal, or the like that has a computing capability. Specific implementation of a computing node is not limited in a specific embodiment of the present invention.

The base station 1800 includes a processor (processor) 1810, a communications interface (Communications Interface) 1820, a memory (memory) 1830, and a bus 1840. The processor 1810, the communications interface 1820, and the memory 1830 communicate with each other by using the bus 1840.

The communications interface 1820 is configured to communicate with a network device, where the network device includes, for example, a virtual machine management center and shared storage.

The processor 1810 is configured to perform a program. The processor 1810 may be a central processing unit CPU, an application-specific integrated circuit ASIC (Application Specific Integrated Circuit), or one or more integrated circuits configured to implement this embodiment of the present invention.

The memory 1830 is configured to store a file. The memory 1830 may include a high-speed RAM memory, and may further include a non-volatile memory (non-volatile memory), for example, at least one disk memory. The memory 1830 may also be a memory array. The memory 1830 may further be divided into blocks, and the blocks may be combined into a virtual volume according to a particular rule.

In a possible implementation manner, the program may be program code including a computer operation instruction. The program may be specifically configured to:
configure a maximum quantity of transmission times for UE, and record a current quantity of transmission times for the UE to perform synchronous hybrid automatic repeat request HARQ transmission on data; and
determine, according to the current quantity of transmission times of the UE and the maximum quantity of transmission times, a manner of the HARQ transmission performed by the UE on the data at a current time point.

In a possible implementation manner, the configuring a maximum quantity of transmission times for UE, and recording a current quantity of transmission times for the UE to perform synchronous hybrid automatic repeat request HARQ transmission on data include:
when the UE needs to perform the HARQ transmission on the data at the current time point, acquiring a transmission condition of the UE at the current time point; and
determining, according to the transmission condition, a value of a counter identifying the current quantity of transmission times.

In a possible implementation manner, the determining, according to the transmission condition, a value of a counter identifying the current quantity of transmission times includes:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; where
an occurrence of any one of the following cases indicates that the HARQ process cancels the HARQ transmission of the data at the current time point according to the transmission condition:
   the base station acquires that a transmission direction at the current time point is downlink when the HARQ process performs retransmission at the current time point; or
   a feedback on last HARQ transmission received by the HARQ process is an acknowledgement ACK, and the base station sends no HARQ scheduling command; or
   the HARQ process conflicts with a measurement gap at the current time point.

In a possible implementation manner, the determining, according to the current quantity of transmission times and the maximum quantity of transmission times that is configured by the base station for the UE, a manner of the HARQ transmission performed by the UE at a current time point includes:
if the value of the counter identifying the current quantity of transmission times is less than or equal to a specified threshold, enabling the UE to perform the non-adaptive retransmission or the adaptive retransmission on the data, where the specified threshold is determined according to the maximum quantity of transmission times; or if the value of the counter identifying the current quantity of transmission times is greater than or equal to the specified threshold, enabling the UE to perform the adaptive retransmission on the data according to scheduling of the base station.

In a possible implementation manner, the increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition further include:
delaying a time point for the UE to perform the HARQ transmission on the data until an N^{th} time point after the current time point, where
N is a preconfigured positive integer; or N is a time point when uplink transmission is allowed to be performed after the current time point; or N is a constant time point for performing uplink transmission after the current time point, where the constant time point for performing the uplink transmission includes a constant uplink subframe and/or a constant uplink pilot UpPTS.

The program may further be specifically configured to:
send a HARQ transmission configuration instruction to UE, where the configuration instruction is used to instruct the UE to adjust a transmission manner of HARQ transmission to asynchronization; and
send a scheduling command to the UE, so that the UE performs the HARQ transmission on data.

In a possible implementation manner, the sending a HARQ transmission configuration instruction to UE includes:
sending the HARQ transmission configuration instruction to the UE by using a radio resource control RRC protocol message, a Media Access Control layer message, or a physical layer message.

The program may further be specifically configured to:
send an uplink-downlink configuration change command to UE, where the uplink-downlink configuration change command is used to notify the UE of a new uplink-downlink configuration; and
clear an uplink synchronous hybrid automatic repeat request HARQ soft buffer and/or a downlink HARQ buffer of the UE according to the new uplink-downlink configuration, or cancel, by the base station, uplink HARQ transmission and/or downlink HARQ transmission of the UE according to the new uplink-downlink configuration.

In a possible implementation manner, the clearing an uplink synchronous hybrid automatic repeat request HARQ soft buffer of the UE according to the new uplink-downlink configuration includes:
clearing data in the uplink HARQ buffers of all the uplink HARQ processes of the UE, or clearing, by the base station, data in the uplink HARQ soft buffer of the redundant uplink HARQ process of the UE;
the clearing a downlink HARQ buffer of the UE according to the new uplink-downlink configuration includes:
   clearing data in the downlink HARQ buffers of all the downlink HARQ processes of the UE, or clearing, by the base station, data in the downlink HARQ buffer of the redundant downlink HARQ process of the UE;
the canceling uplink HARQ transmission of the UE according to the new uplink-downlink configuration includes:
   canceling transmission of data of all the uplink HARQ processes of the UE, or canceling, by the base station, transmission of data of the redundant uplink HARQ process of the UE; and
the canceling downlink HARQ transmission of the UE according to the new uplink-downlink configuration includes:
   canceling transmission of data in buffers of all the downlink HARQ processes of the UE, or canceling, by the base station, transmission of data in the redundant downlink HARQ buffer of the UE.

In a possible implementation manner, the clearing data in the uplink HARQ soft buffer of the redundant uplink HARQ process of the UE includes:
clearing, according to the uplink-downlink configuration notified in the new uplink-downlink configuration change command, the HARQ soft buffer of an uplink HARQ process that is of the UE and that cannot perform the uplink HARQ transmission;
the clearing data in the downlink HARQ buffer of the redundant downlink HARQ process of the UE includes:
   clearing, according to the uplink-downlink configuration notified in the uplink-downlink configuration change command, the HARQ buffer of the downlink HARQ process that is of the UE and that cannot perform the downlink HARQ transmission;
the canceling transmission of data of the redundant uplink HARQ process of the UE includes:
   canceling, according to the uplink-downlink configuration notified in the uplink-downlink configuration change command, transmission of data in the HARQ soft buffer of the uplink HARQ process that is of the UE and that cannot perform the uplink HARQ transmission; and
the canceling transmission of data in the redundant downlink HARQ buffer of the UE includes:
   canceling, according to the uplink-downlink configuration notified in the uplink-downlink configuration change command, transmission of data in the HARQ soft buffer of the downlink HARQ process that is of the UE and that cannot perform the downlink HARQ transmission.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the present invention.

If the functions are implemented by computer software and are sold or used as independent products, it may be deemed, to some extent, that all or part (such as the part that contributes to the prior art) of the technical solutions of the present invention is embodied by a computer software product. The computer software product is generally stored in a computer readable non-volatile storage medium and includes several instructions for instructing a computer device (which may be a personal computer, a server, or a network device, and the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

**1.** User equipment, comprising:
an acquiring unit, configured to record a current quantity of transmission times for performing synchronous hybrid automatic repeat request HARQ transmission on data; and
a determining unit, connected to the acquiring unit, and configured to determine, according to the current quantity of transmission times and a maximum quantity of transmission times that is configured by a base station, a manner of the HARQ transmission performed on the data at a current time point, wherein the HARQ transmission manner comprises adaptive retransmission and non-adaptive retransmission.

**2.** The user equipment according to claim 1, wherein the acquiring unit is configured to:
when the HARQ transmission is performed on the data at the current time point, acquire a transmission condition at the current time point;
the user equipment further comprises:
a counter, connected to the acquiring unit and the determining unit, and configured to identify the current quantity of transmission times; and
the determining unit is configured to determine a value of the counter according to the transmission condition.

**3.** The user equipment according to claim 2, wherein the determining unit is further configured to:
increase the counter by one if the HARQ transmission needs to be performed on the data at the current time point, and decrease the counter by one if the HARQ transmission of the data at the current time point is canceled according to the transmission condition; or
increase the counter by one if a HARQ entity notifies a HARQ process that the HARQ transmission needs to be performed on the data at the current time point, and keep the counter unchanged if the HARQ process cancels the HARQ transmission of the data at the current time point according to the transmission condition; or
increase the counter by one if the HARQ transmission is actually performed at the current time point according to the transmission condition; wherein
an occurrence of any one of the following cases indicates that the determining unit cancels the HARQ transmission of the data at the current time point according to the transmission condition:
that a transmission direction at the current time point is downlink is acquired when retransmission is performed at the current time point; or
a received feedback on last HARQ transmission is an acknowledgement ACK, and no HARQ scheduling command of the base station is received; or
there is a conflict with a measurement gap at the current time point.

**4.** The user equipment according to any one of claims 1 to 3, wherein the determining unit is further configured to:
if the value of the counter identifying the current quantity of transmission times is less than a specified threshold, perform the non-adaptive retransmission or the adaptive retransmission on the data, wherein the specified threshold is determined according to the maximum quantity of transmission times; or if the value of the counter identifying the current quantity of transmission times is greater than or equal to the specified threshold, perform the adaptive retransmission on the data according to scheduling of the base station.

**5.** User equipment, comprising:
an acquiring unit, configured to: when HARQ transmission is performed on data at a current time point, acquire a transmission condition at the current time point; and
a determining unit, connected to the acquiring unit, and configured to cancel the HARQ transmission of the data at the current time point according to the transmission condition.

**6.** The user equipment according to claim 5, wherein the determining unit is further configured to:
if a transmission direction at the current time point is uplink, perform the HARQ transmission on the data at the current time point, or if the transmission direction is downlink, cancel the HARQ transmission of the data at the current time point; or
if a received feedback on last HARQ transmission is an ACK, and no HARQ scheduling command of the base station is received, cancel the HARQ transmission of the data at the current time point; or
if there is a conflict with a measurement gap at the current time point, cancel the HARQ transmission of the data at the current time point.

**7.** The user equipment according to claim 5, wherein the determining unit is further configured to:
delay a time point for performing the HARQ transmission on the data until an N^{th} time point after the current time point, wherein
N is a preconfigured positive integer; or N is a time point when uplink transmission is allowed to be performed after the current time point; or N is a constant time point for performing uplink transmission after the current time point, wherein the constant time point for performing the uplink transmission comprises a constant uplink subframe and/or a constant uplink pilot UpPTS.

**8.** User equipment, comprising:
an acquiring unit, configured to receive a HARQ transmission configuration instruction from a base station, wherein the configuration instruction is used to instruct to adjust a transmission manner of HARQ transmission to asynchronization; and
a determining unit, connected to the acquiring unit, and configured to determine, according to a scheduling command of the base station, whether the HARQ transmission is performed on data.

**9.** The user equipment according to claim 8, wherein the acquiring unit is configured to:
receive the HARQ transmission configuration instruction from the base station by using a radio resource control RRC protocol message, a Media Access Control layer message, or a physical layer message; or
receive the HARQ transmission configuration instruction from the receiving base station by means of time division duplex TDD.

**10.** User equipment, comprising:
an acquiring unit, configured to receive an uplink-downlink configuration change command from a base station, wherein the uplink-downlink configuration change command is used to notify the UE of a new uplink-downlink configuration; and
an execution unit, connected to the acquiring unit, and configured to clear an uplink synchronous hybrid automatic repeat request HARQ buffer and/or a downlink HARQ soft buffer according to the new uplink-downlink configuration, or configured to cancel uplink HARQ transmission and/or downlink HARQ transmission according to the new uplink-downlink configuration.

**11.** The user equipment according to claim 10, wherein the execution unit is configured to:
clear data in the uplink HARQ buffers of all the uplink HARQ processes, or clear data in the uplink HARQ buffer of the redundant uplink HARQ process, and/or
clear data in the downlink HARQ soft buffers of all the downlink HARQ processes, or clear data in the downlink HARQ soft buffer of the redundant downlink HARQ process; or
cancel transmission of data of all the uplink HARQ processes, or cancel transmission of data of the redundant uplink HARQ process, and/or
cancel transmission of data in soft buffers of all the downlink HARQ processes, or cancel transmission of data in the redundant downlink HARQ soft buffer.

**12.** The user equipment according to claim 11, wherein the execution unit is configured to:
clear, according to the uplink-downlink configuration notified in the new uplink-downlink configuration change command, the HARQ buffer of an uplink HARQ process that cannot perform the uplink HARQ transmission, and/or
clear, by the UE according to the uplink-downlink configuration notified in the uplink-downlink configuration change command, the HARQ buffer of the downlink HARQ process that cannot perform the downlink HARQ transmission; or
cancel, according to the uplink-downlink configuration notified in the uplink-downlink configuration change command, transmission of data in the HARQ buffer of the uplink HARQ process that cannot perform the uplink HARQ transmission, and/or
cancel, according to the uplink-downlink configuration notified in the uplink-downlink configuration change command, transmission of data in the HARQ buffer of the downlink HARQ process that cannot perform the downlink HARQ transmission.

**13.** An uplink data scheduling method, comprising:
recording, by user equipment UE, a current quantity of transmission times for performing synchronous hybrid automatic repeat request HARQ transmission on data; and
determining, by the UE according to the current quantity of transmission times and a maximum quantity of transmission times that is configured by a base station for the UE, a manner of the HARQ transmission performed by the UE on the data at a current time point, wherein the HARQ transmission manner comprises adaptive retransmission and non-adaptive retransmission.

**14.** The uplink data scheduling method according to claim 13, wherein the recording, by UE, a current quantity of transmission times for performing HARQ transmission on data comprises:
when the UE needs to perform the HARQ transmission on the data at the current time point, acquiring a transmission condition of the UE at the current time point; and
determining, according to the transmission condition, a value of a counter identifying the current quantity of transmission times.

**15.** The uplink data scheduling method according to claim 14, wherein the determining, according to the transmission condition, a value of a counter identifying the current quantity of transmission times comprises:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition;
wherein
an occurrence of any one of the following cases indicates that the HARQ process cancels the HARQ transmission of the data at the current time point according to the transmission condition:
the UE acquires that a transmission direction at the current time point is downlink when the HARQ process performs retransmission at the current time point; or
a feedback on last HARQ transmission received by the HARQ process is an acknowledgement ACK, and no HARQ scheduling command of the base station is received; or
the HARQ process conflicts with a measurement gap at the current time point.

**16.** The uplink data scheduling method according to any one of claims 13 to 15, wherein the determining, by the UE according to the current quantity of transmission times and a maximum quantity of transmission times that is configured by a base station for the UE, a manner of the HARQ transmission performed by the UE at a current time point comprises:
if the value of the counter identifying the current quantity of transmission times is less than or equal to a specified threshold, performing, by the UE, the non-adaptive retransmission or the adaptive retransmission on the data, wherein the specified threshold is determined according to the maximum quantity of transmission times; or if the value of the counter identifying the current quantity of transmission times is greater than or equal to the specified threshold, performing, by the UE, the adaptive retransmission on the data according to scheduling of the base station.

**17.** An uplink data scheduling method, comprising:
when UE needs to perform HARQ transmission on data at a current time point, acquiring a transmission condition of the UE at the current time point; and
canceling, by the UE, the HARQ transmission of the data at the current time point according to the transmission condition.

**18.** The uplink data scheduling method according to claim 17, wherein the canceling, by the UE, the HARQ transmission of the data at the current time point according to the transmission condition comprises:
if a transmission direction of the UE at the current time point is uplink, performing, by the UE, the HARQ transmission on the data at the current time point, or if the transmission direction is downlink, canceling, by the UE, the HARQ transmission of the data at the current time point; or
if a feedback on last HARQ transmission received by the UE is an ACK, and no HARQ scheduling command of the base station is received, canceling, by the UE, the HARQ transmission of the data at the current time point; or
if the UE conflicts with a measurement gap at the current time point, canceling, by the UE, the HARQ transmission of the data at the current time point.

**19.** The uplink data scheduling method according to claim 17, after the determining, by the UE, to cancel the HARQ transmission of the data at the current time point according to the transmission condition, further comprising:
delaying, by the UE, a time point for performing the HARQ transmission on the data until an N^{th} time point after the current time point, wherein
N is a preconfigured positive integer; or N is a time point when uplink transmission is allowed to be performed after the current time point; or N is a constant time point for performing uplink transmission after the current time point, wherein the constant time point for performing the uplink transmission comprises a constant uplink subframe and/or a constant uplink pilot UpPTS.

**20.** An uplink data scheduling method, comprising:
receiving, by UE, a HARQ transmission configuration instruction from a base station, wherein the configuration instruction is used to instruct the UE to adjust a transmission manner of HARQ transmission to asynchronization; and
determining, by the UE according to a scheduling command of the base station, whether the HARQ transmission is performed on data.

**21.** The uplink data scheduling method according to claim 20, wherein the receiving, by UE, a HARQ transmission configuration instruction from a base station comprises:
receiving, by the UE, the HARQ transmission configuration instruction from the receiving base station by using a radio resource control RRC protocol message, a Media Access Control layer message, or a physical layer message.

**22.** An uplink data scheduling method, comprising:
receiving, by UE, an uplink-downlink configuration change command from a base station, wherein the uplink-downlink configuration change command is used to notify the UE of a new uplink-downlink configuration; and
clearing, by the UE, an uplink synchronous hybrid automatic repeat request HARQ buffer and/or a downlink HARQ soft buffer according to the new uplink-downlink configuration, or canceling, by the UE, uplink HARQ transmission and/or downlink HARQ transmission according to the new uplink-downlink configuration.

**23.** The uplink data scheduling method according to claim 22, wherein the clearing, by the UE, an uplink HARQ buffer according to the new uplink-downlink configuration comprises:
clearing, by the UE, data in the uplink HARQ buffers of all the uplink HARQ processes, or clearing, by the UE, data in the uplink HARQ buffer of the redundant uplink HARQ process;
the clearing, by the UE, a downlink HARQ soft buffer according to the new uplink-downlink configuration comprises:
clearing, by the UE, data in the downlink HARQ soft buffers of all the downlink HARQ processes, or clearing, by the UE, data in the downlink HARQ soft buffer of the redundant downlink HARQ process;
the canceling, by the UE, uplink HARQ transmission according to the new uplink-downlink configuration comprises:
canceling, by the UE, transmission of data of all the uplink HARQ processes, or canceling, by the UE, transmission of data of the redundant uplink HARQ process; and
the canceling, by the UE, downlink HARQ transmission according to the new uplink-downlink configuration comprises:
canceling, by the UE, transmission of data in soft buffers of all the downlink HARQ processes, or canceling, by the UE, transmission of data in the redundant downlink HARQ soft buffer.

**24.** The uplink data scheduling method according to claim 23, wherein the clearing, by the UE, data in the uplink HARQ buffer of the redundant uplink HARQ process comprises:
clearing, by the UE according to the uplink-downlink configuration notified in the new uplink-downlink configuration change command, the HARQ buffer of an uplink HARQ process that cannot perform the uplink HARQ transmission;
the clearing, by the UE, data in the downlink HARQ soft buffer of the redundant downlink HARQ process comprises:
clearing, by the UE according to the uplink-downlink configuration notified in the uplink-downlink configuration change command, the HARQ buffer of the downlink HARQ process that cannot perform the downlink HARQ transmission;
the canceling, by the UE, transmission of data of the redundant uplink HARQ process comprises:
canceling, by the UE according to the uplink-downlink configuration notified in the uplink-downlink configuration change command, transmission of data in the HARQ buffer of the uplink HARQ process that cannot perform the uplink HARQ transmission; and
the canceling, by the UE, transmission of data in the redundant downlink HARQ soft buffer comprises:
canceling, by the UE according to the uplink-downlink configuration notified in the uplink-downlink configuration change command, transmission of data in the HARQ buffer of the downlink HARQ process that cannot perform the downlink HARQ transmission.

**25.** A base station, comprising:
a control unit, configured to: configure a maximum quantity of transmission times for UE, and record a current quantity of transmission times for the UE to perform synchronous hybrid automatic repeat request HARQ transmission on data; and
an execution unit, connected to the control unit, and configured to determine, according to the current quantity of transmission times of the UE and the maximum quantity of transmission times, a manner of the HARQ transmission performed by the UE on the data at a current time point.

**26.** The base station according to claim 25, wherein the control unit is configured to:
when the UE needs to perform the HARQ transmission on the data at the current time point, acquire a transmission condition of the UE at the current time point; and
the base station further comprises:
a counter, connected to the control unit and the execution unit, and configured to determine, according to the transmission condition, a value of the counter identifying the current quantity of transmission times.

**27.** The base station according to claim 26, wherein the execution unit is configured to:
increase the counter by one if a HARQ entity in the UE notifies a HARQ process that the HARQ transmission needs to be performed on the data at the current time point, and decrease the counter by one if the HARQ process cancels the HARQ transmission of the data at the current time point according to the transmission condition; or
increase the counter by one if a HARQ entity in the UE notifies a HARQ process that the HARQ transmission needs to be performed on the data at the current time point, and keep the counter unchanged if the HARQ process cancels the HARQ transmission of the data at the current time point according to the transmission condition; or
increase the counter by one if the HARQ process actually performs the HARQ transmission at the current time point according to the transmission condition; wherein
an occurrence of any one of the following cases indicates that the HARQ process cancels the HARQ transmission of the data at the current time point according to the transmission condition:
a transmission direction at the current time point is downlink; or
the HARQ process sends no scheduling command; or
the HARQ process conflicts with a measurement gap at the current time point.

**28.** The base station according to any one of claims 25 to 27, wherein the execution unit is configured to:
if the value of the counter identifying the current quantity of transmission times is less than or equal to a specified threshold, enable the UE to perform the non-adaptive retransmission or the adaptive retransmission on the data, wherein the specified threshold is determined according to the maximum quantity of transmission times; or if the value of the counter identifying the current quantity of transmission times is greater than or equal to the specified threshold, enable the UE to perform the adaptive retransmission on the data according to a scheduling command.

**29.** The base station according to any one of claims 25 to 28, wherein the execution unit is configured to:
delay a time point for the UE to perform the HARQ transmission on the data until an N^{th} time point after the current time point, wherein
N is a preconfigured positive integer; or N is a time point when uplink transmission is allowed to be performed after the current time point; or N is a constant time point for performing uplink transmission after the current time point, wherein the constant time point for performing the uplink transmission comprises a constant uplink subframe and/or a constant uplink pilot UpPTS.

**30.** A base station, comprising:
a control unit, configured to send a HARQ transmission configuration instruction to UE, wherein the configuration instruction is used to instruct the UE to adjust a transmission manner of HARQ transmission to asynchronization; and
an execution unit, connected to the control unit, and configured to send a scheduling command to the UE, so that the UE performs the HARQ transmission on data.

**31.** The base station according to claim 30, wherein the control unit is configured to:
send the HARQ transmission configuration instruction to the UE by using a radio resource control RRC protocol message, a Media Access Control layer message, or a physical layer message.

**32.** A base station, comprising:
a control unit, configured to send an uplink-downlink configuration change command to UE, wherein the uplink-downlink configuration change command is used to notify the UE of a new uplink-downlink configuration; and
an execution unit, connected to the control unit, and configured to clear an uplink synchronous hybrid automatic repeat request HARQ soft buffer and/or a downlink HARQ buffer of the UE according to the new uplink-downlink configuration, or configured to cancel uplink HARQ transmission and/or downlink HARQ transmission of the UE according to the new uplink-downlink configuration.

**33.** The base station according to claim 32, wherein the execution unit is configured to:
clear data in the uplink HARQ buffers of all the uplink HARQ processes of the UE, or clear data in the uplink HARQ soft buffer of the redundant uplink HARQ process of the UE, and/or
clear data in the downlink HARQ buffers of all the downlink HARQ processes of the UE, or clear data in the downlink HARQ buffer of the redundant downlink HARQ process of the UE; or
cancel transmission of data of all the uplink HARQ processes of the UE, or cancel transmission of data of the redundant uplink HARQ process of the UE, and/or
cancel transmission of data in buffers of all the downlink HARQ processes of the UE, or cancel transmission of data in the redundant downlink HARQ buffer of the UE.

**34.** The base station according to claim 33, wherein the execution unit is further configured to:
clear, according to the uplink-downlink configuration notified in the new uplink-downlink configuration change command, the HARQ soft buffer of an uplink HARQ process that is of the UE and that cannot perform the uplink HARQ transmission, and/or
clear, according to the uplink-downlink configuration notified in the uplink-downlink configuration change command, the HARQ buffer of the downlink HARQ process that is of the UE and that cannot perform the downlink HARQ transmission; or
cancel, according to the uplink-downlink configuration notified in the uplink-downlink configuration change command, transmission of data in the HARQ soft buffer of the uplink HARQ process that is of the UE and that cannot perform the uplink HARQ transmission, and/or
cancel, according to the uplink-downlink configuration notified in the uplink-downlink configuration change command, transmission of data in the HARQ soft buffer of the downlink HARQ process that is of the UE and that cannot perform the downlink HARQ transmission.

**35.** An uplink data scheduling method, comprising:
configuring, by a base station, a maximum quantity of transmission times for UE, and recording a current quantity of transmission times for the UE to perform synchronous hybrid automatic repeat request HARQ transmission on data; and
determining, by the base station according to the current quantity of transmission times of the UE and the maximum quantity of transmission times, a manner of the HARQ transmission performed by the UE on the data at a current time point.

**36.** The uplink data scheduling method according to claim 35, wherein the configuring, by a base station, a maximum quantity of transmission times for UE, and recording a current quantity of transmission times for the UE to perform synchronous hybrid automatic repeat request HARQ transmission on data comprise:
when the UE needs to perform the HARQ transmission on the data at the current time point, acquiring a transmission condition of the UE at the current time point; and
determining, according to the transmission condition, a value of a counter identifying the current quantity of transmission times.

**37.** The uplink data scheduling method according to claim 36, wherein the determining, according to the transmission condition, a value of a counter identifying the current quantity of transmission times comprises:
increasing the counter by one if a HARQ entity in the UE notifies a HARQ process that the HARQ transmission needs to be performed on the data at the current time point, and decreasing the counter by one if the HARQ process cancels the HARQ transmission of the data at the current time point according to the transmission condition; or
increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition; or
increasing the counter by one if the HARQ process actually performs the HARQ transmission at the current time point according to the transmission condition; wherein
an occurrence of any one of the following cases indicates that the HARQ process cancels the HARQ transmission of the data at the current time point according to the transmission condition:
the base station acquires that a transmission direction at the current time point is downlink when the HARQ process performs retransmission at the current time point; or
a feedback on last HARQ transmission received by the HARQ process is an acknowledgement ACK, and the base station sends no HARQ scheduling command; or
the HARQ process conflicts with a measurement gap at the current time point.

**38.** The uplink data scheduling method according to any one of claims 35 to 37, wherein the determining, by the UE according to the current quantity of transmission times and a maximum quantity of transmission times that is configured by a base station for the UE, a manner of the HARQ transmission performed by the UE at a current time point comprises:
if the value of the counter identifying the current quantity of transmission times is less than or equal to a specified threshold, enabling the UE to perform the non-adaptive retransmission or the adaptive retransmission on the data, wherein the specified threshold is determined according to the maximum quantity of transmission times; or if the value of the counter identifying the current quantity of transmission times is greater than or equal to the specified threshold, enabling the UE to perform the adaptive retransmission on the data according to scheduling of the base station.

**39.** The uplink data scheduling method according to any one of claims 35 to 38, the increasing the counter by one if a HARQ entity in the UE notifies a HARQ process that the HARQ transmission needs to be performed on the data at the current time point, and keeping the counter unchanged if the HARQ process cancels the HARQ transmission of the data at the current time point according to the transmission condition further comprise:
delaying, by the base station, a time point for the UE to perform the HARQ transmission on the data until an N^{th} time point after the current time point, wherein
N is a preconfigured positive integer; or N is a time point when uplink transmission is allowed to be performed after the current time point; or N is a constant time point for performing uplink transmission after the current time point, wherein the constant time point for performing the uplink transmission comprises a constant uplink subframe and/or a constant uplink pilot UpPTS.

**40.** An uplink data scheduling method, comprising:
sending, by a base station, a HARQ transmission configuration instruction to UE, wherein the configuration instruction is used to instruct the UE to adjust a transmission manner of HARQ transmission to asynchronization; and
sending, by the base station, a scheduling command to the UE, so that the UE performs the HARQ transmission on data.

**41.** The uplink data scheduling method according to claim 40, wherein the sending, by a base station, a HARQ transmission configuration instruction to UE comprises:
sending, by the base station, the HARQ transmission configuration instruction to the UE by using a radio resource control RRC protocol message, a Media Access Control layer message, or a physical layer message.

**42.** An uplink data scheduling method, comprising:
sending, by a base station, an uplink-downlink configuration change command to UE, wherein the uplink-downlink configuration change command is used to notify the UE of a new uplink-downlink configuration; and
clearing, by the base station, an uplink synchronous hybrid automatic repeat request HARQ soft buffer and/or a downlink HARQ buffer of the UE according to the new uplink-downlink configuration, or canceling, by the base station, uplink HARQ transmission and/or downlink HARQ transmission of the UE according to the new uplink-downlink configuration.

**43.** The uplink data scheduling method according to claim 42, wherein the clearing, by the base station, an uplink synchronous hybrid automatic repeat request HARQ soft buffer of the UE according to the new uplink-downlink configuration comprises:
clearing, by the base station, data in the uplink HARQ buffers of all the uplink HARQ processes of the UE, or clearing, by the base station, data in the uplink HARQ soft buffer of the redundant uplink HARQ process of the UE;
the clearing, by the base station, a downlink HARQ buffer of the UE according to the new uplink-downlink configuration comprises:
clearing, by the base station, data in the downlink HARQ buffers of all the downlink HARQ processes of the UE, or clearing, by the base station, data in the downlink HARQ buffer of the redundant downlink HARQ process of the UE;
the canceling, by the base station, uplink HARQ transmission of the UE according to the new uplink-downlink configuration comprises:
canceling, by the base station, transmission of data of all the uplink HARQ processes of the UE, or canceling, by the base station, transmission of data of the redundant uplink HARQ process of the UE; and
the canceling, by the base station, downlink HARQ transmission of the UE according to the new uplink-downlink configuration comprises:
canceling, by the base station, transmission of data in buffers of all the downlink HARQ processes of the UE, or canceling, by the base station, transmission of data in the redundant downlink HARQ buffer of the UE.

**44.** The uplink data scheduling method according to claim 43, wherein the clearing, by the base station, data in the uplink HARQ soft buffer of the redundant uplink HARQ process of the UE comprises:
clearing, by the base station according to the uplink-downlink configuration notified in the new uplink-downlink configuration change command, the HARQ soft buffer of an uplink HARQ process that is of the UE and that cannot perform the uplink HARQ transmission;
the clearing, by the base station, data in the downlink HARQ buffer of the redundant downlink HARQ process of the UE comprises:
clearing, by the base station according to the uplink-downlink configuration notified in the uplink-downlink configuration change command, the HARQ buffer of the downlink HARQ process that is of the UE and that cannot perform the downlink HARQ transmission;
the canceling, by the base station, transmission of data of the redundant uplink HARQ process of the UE comprises:
canceling, by the base station according to the uplink-downlink configuration notified in the uplink-downlink configuration change command, transmission of data in the HARQ soft buffer of the uplink HARQ process that is of the UE and that cannot perform the uplink HARQ transmission; and
the canceling, by the base station, transmission of data in the redundant downlink HARQ buffer of the UE comprises:
canceling, by the base station according to the uplink-downlink configuration notified in the uplink-downlink configuration change command, transmission of data in the HARQ soft buffer of the downlink HARQ process that is of the UE and that cannot perform the downlink HARQ transmission.

**42.** A communications system, comprising:
at least one user equipment UE and at least one base station, wherein
the user equipment uses the user equipment according to any one of claims 1 to 12; and
the base station uses the base station according to any one of claims 25 to 34.
